# EUROPEAN PATENT APPLICATION

(11) **EP 4 597 405 A1**
(43) Date of publication of application: **06.08.2025**
(21) Application number: 23872087.4
(22) Date of filing: 20.09.2023
(51) Int. Cl.: G06Q 30/0601, G06Q 50/04

(54) **COMPONENT PURCHASE ASSISTANCE DEVICE, COMPONENT PURCHASE ASSISTANCE METHOD, AND COMPONENT PURCHASE ASSISTANCE PROGRAM**

(30) Priority: 30.09.2022 JP 2022158490
(71) Applicant: Mitsubishi Heavy Industries, Ltd., Tokyo 100-8332 (JP)
(72) Inventor: SHIMBO, Yoichi, Tokyo 100-8332 (JP)
(74) Representative: Daub, Thomas
(86) International application number: PCT/JP2023/034154
(87) International publication number: WO 2024/070860

(57) **Abstract**

The component purchase support device (1) includes: a condition entry support unit (31) configured to allow a user to input at least any one of a name of a component that the user wishes to purchase, a fluid type, a design temperature, a design pressure, an operation temperature, and an operation pressure as an input condition; a component selection unit (34) configured to select plant components conforming to the input condition from a model number database (21) in which model numbers of plant components and specification data are associated with each other and display all or some of the plurality of selected plant components on a client terminal as candidate components; and a quotation preparation unit (35) configured to acquire prices and delivery times of the candidate components selected by the user from a price and delivery time database (22) in which delivery times and prices of plant components are registered on a supplier basis and display the acquired prices and delivery times on the client terminal.

## Description

### [Technical Field]

The present disclosure relates to a component purchase support device, a component purchase support method, and a component purchase support program.

### [Background Art]

For example, when a potential purchaser (hereafter, which may be referred to as "user") purchases a plant component, it is generally necessary for the user to go through steps described below with a supplier. Herein, an example of the potential purchaser may be a plant manufacturer or the like.

First, the potential purchaser prepares a rough specification of a component, and presents the prepared general specification to a supplier to request a quotation from the supplier. The supplier prepares a written quotation based on the general specification and presents the prepared written quotation to the potential purchaser. The potential purchaser coordinates the specification and places an order with the supplier from which the potential purchaser requested the quotation.

In such a way, since many steps are conventionally required before an order is placed, time and effort are required in placing an order of a component. A potential purchaser can only obtain a quotation from the supplier from which the potential purchaser made an inquiry by itself. Thus, for example, even when there is a supplier that provides a similar component under better conditions (for example, a lower price, a shorter delivery time, a better service, or the like), there is inconvenience of being unable to reach the supplier. Furthermore, from a viewpoint on a supplier side, when a case is for a small lot and a low-price component, the sales or the profit is smaller for time and effort of preparing a quotation, which is not cost-effective. This may lead to a disadvantage for the potential purchaser, such as the request being handled later over other cases, the provided price being quoted relatively higher, or the like.

As a system to reduce steps or time and effort for procurement of components, for example, there is conventionally a system disclosed in Patent Literature 1. In this system, in response to transmission of drawing data on a component from a manufacturer to a manufacturing outsourcing support device, the manufacturing outsourcing support device analyzes the drawing data to determine a machinability of the component, requests a quotation from a plurality of machining companies that can machine the component, and responds with the quoted price to the manufacturer. In such away, the manufacturing outsourcing support device disclosed in Patent Literature 1 mediates transactions between a manufacturer and machining companies by itself and thus can reduce burdens on both the parties for procurement of components.

### [Citation List]

### [Patent Literature]

[PTL 1]
Japanese Patent No. 6462945

### [Summary of Invention]

### [Technical Problem]

However, the manufacturing outsourcing support device disclosed in Patent Literature 1 is a system dedicated to machined components and is not readily applicable to arrangement of plant components. That is, for plant components, it is necessary to decide components to be purchased under consideration on parameters specific to fluid transport systems, such as a flow rate or a pressure loss, in addition to constraint conditions such as a design pressure, an operation pressure, a design temperature, an operation temperature, or the like. As discussed above, when a lot of information or calculation is required in selecting components, it is difficult for the manufacturing outsourcing support device disclosed in Patent Literature 1 to arrange components that meet all the constraint conditions or the like.

Further, EC sites where components can be easily purchased online are conventionally known. However, these EC sites simply display listed components and are not suitable for procurement of plant components that have to be selected under consideration on constraint conditions or parameters specific to fluid transport systems.

The present disclosure has been made in view of such circumstances and intends to provide a component purchase support device, a component purchase support method, and a component purchase support program that enable easy purchasing of a plant component involving plant engineering.

### [Solution to Problem]

A component purchase support device according to one aspect of the present disclosure is a component purchase support device configured to support purchase of a plant component, and the component purchase support device includes: a condition entry support unit configured to allow a user to input at least any one of a name of a component that the user wishes to purchase, a fluid type, a design temperature, a design pressure, an operation temperature, and an operation pressure as an input condition; a component selection unit configured to select, from a model number database, plant components conforming to the input condition, model numbers of plant components and specification data being associated with each other in the model number database, and display all or some of the plurality of selected plant components on a client terminal as candidate components; and a quotation preparation unit configured to acquire, from a price and delivery time database, prices and delivery times of the candidate components selected by the user, delivery times and prices of plant components being registered in the price and delivery time database on a supplier basis, and display the acquired prices and delivery times on the client terminal.

A component purchase support method according to one aspect of the present disclosure is a component purchase support method for supporting purchase of a plant component, and the component purchase support method includes: at a computer, allowing a user to input at least any one of a name of a component that the user wishes to purchase, a fluid type, a design temperature, a design pressure, an operation temperature, and an operation pressure as an input condition; selecting, from a model number database, plant components conforming to the input condition, model numbers of plant components and specification data being associated with each other in the model number database, and displaying all or some of the plurality of selected plant components on a client terminal as candidate components; and acquiring, from a price and delivery time database, prices and delivery times of the candidate components selected by the user, delivery times and prices of plant components being registered in the price and delivery time database on a supplier basis, and displaying the acquired prices and delivery times on the client terminal.

A component purchase support program according to one aspect of the present disclosure is a component purchase support program that causes a computer to perform the component purchase support method described above.

### [Advantageous Effects of Invention]

According to the component purchase support device, the component purchase support method, and the component purchase support program of the present disclosure, it is possible to easily purchase a plant component involving plant engineering.

### [Brief Description of Drawings]

[Fig. 1]

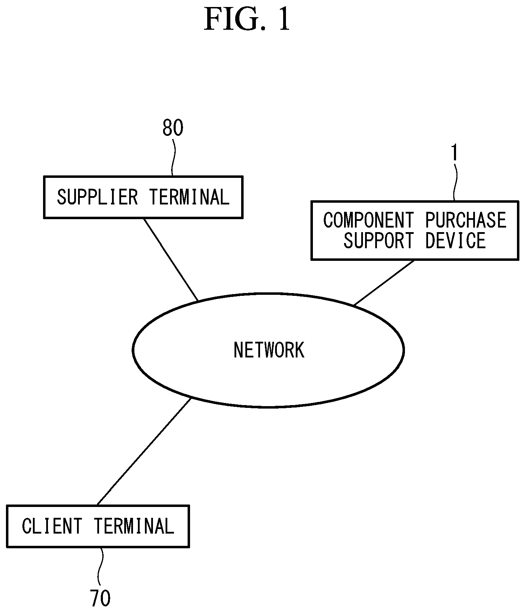

   Fig. 1 is a diagram illustrating a network configuration of a component purchase support device according to one embodiment of the present disclosure.
[Fig. 2]

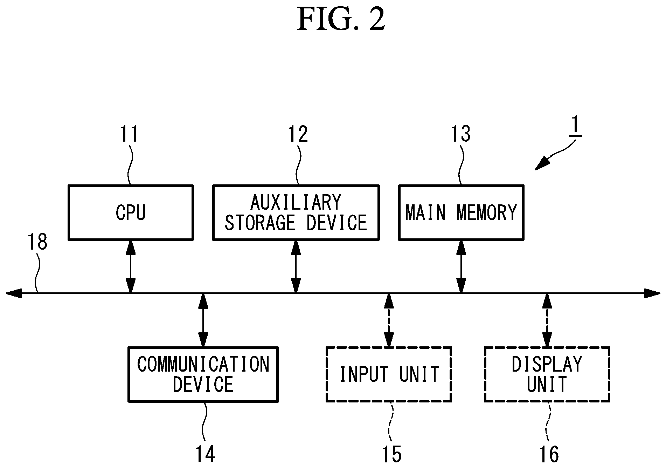

   Fig. 2 is a schematic configuration diagram illustrating an example of the hardware configuration of the component purchase support device according to one embodiment of the present disclosure.
[Fig. 3]

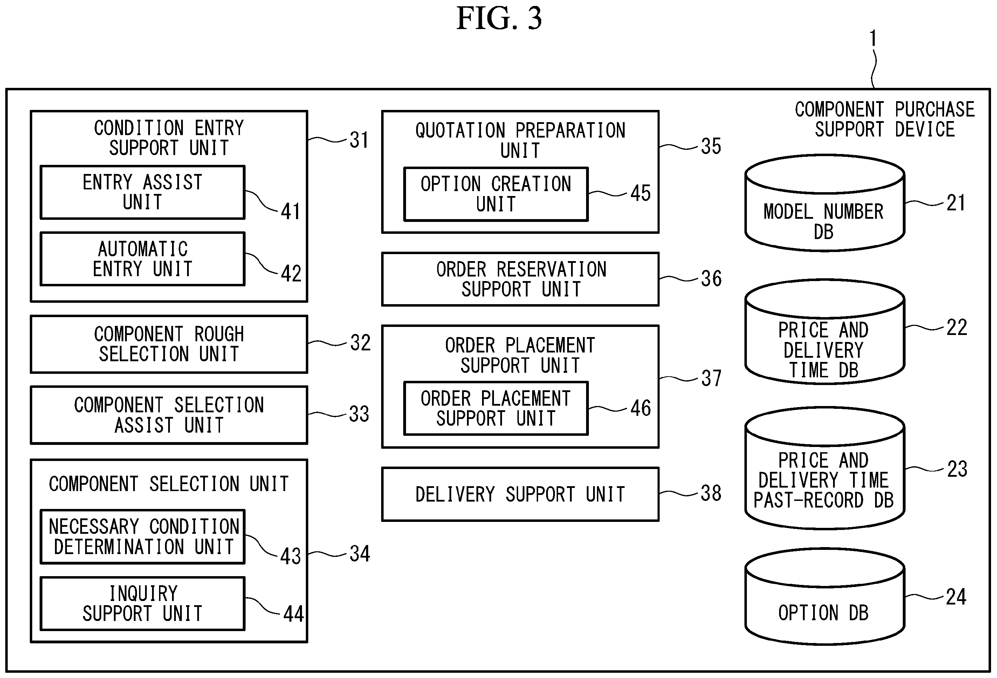

   Fig. 3 is a function diagram illustrating an example of functions of the component purchase support device according to one embodiment of the present disclosure.
[Fig. 4]

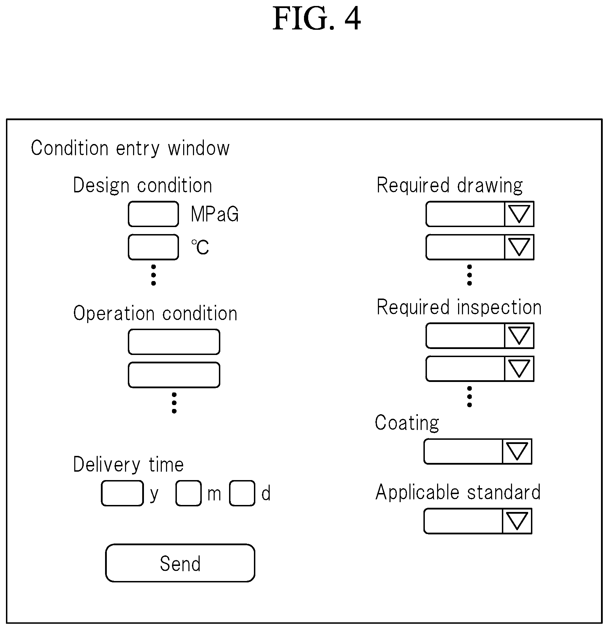

   Fig. 4 is a diagram illustrating an example of a condition entry window according to one embodiment of the present disclosure.
[Fig. 5]

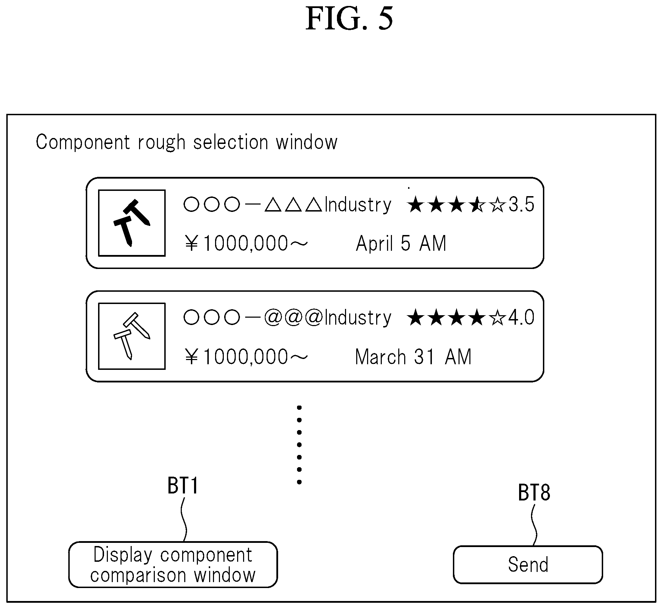

   Fig. 5 is a diagram illustrating an example of a component rough selection window according to one embodiment of the present disclosure.
[Fig. 6]

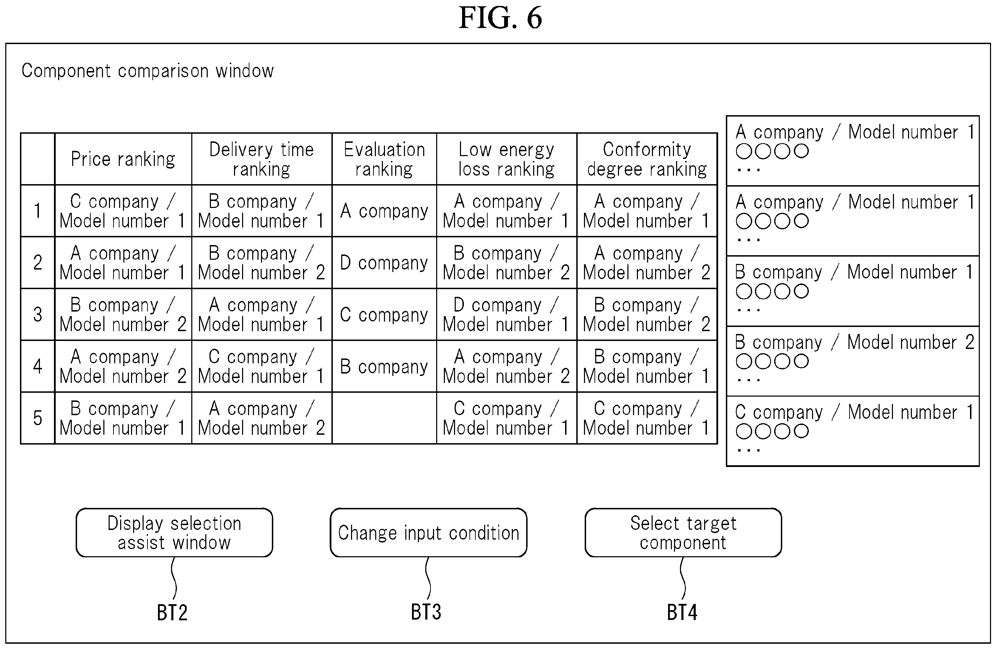

   Fig. 6 is a diagram illustrating an example of a component comparison window according to one embodiment of the present disclosure.
[Fig. 7]

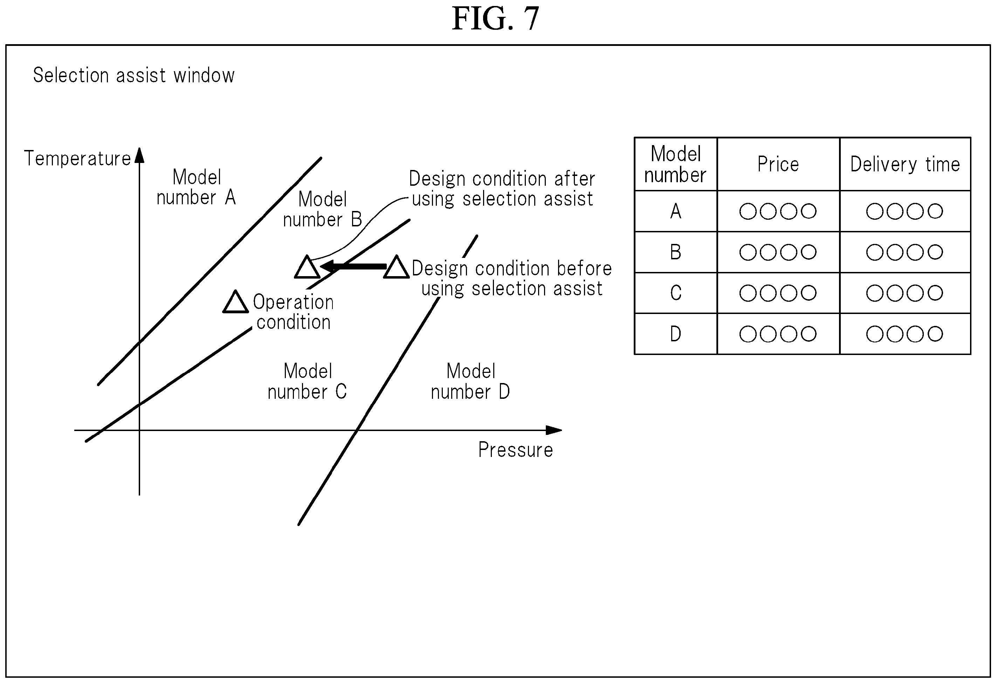

   Fig. 7 is a diagram illustrating an example of a selection assist window according to one embodiment of the present disclosure.
[Fig. 8]

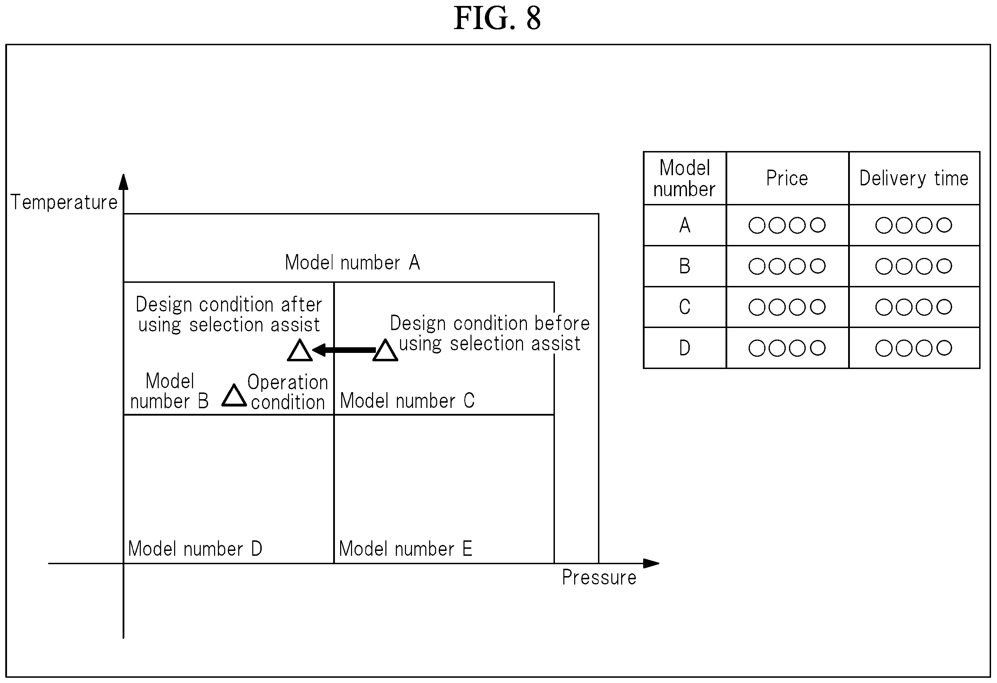

   Fig. 8 is a diagram illustrating another example of a selection assist window according to one embodiment of the present disclosure.
[Fig. 9]

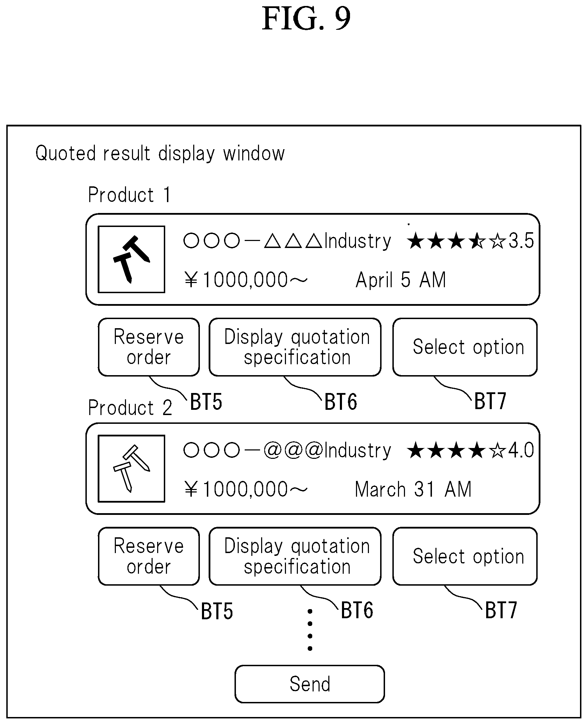

   Fig. 9 is a diagram illustrating an example of a quoted result display window according to one embodiment of the present disclosure.
[Fig. 10]

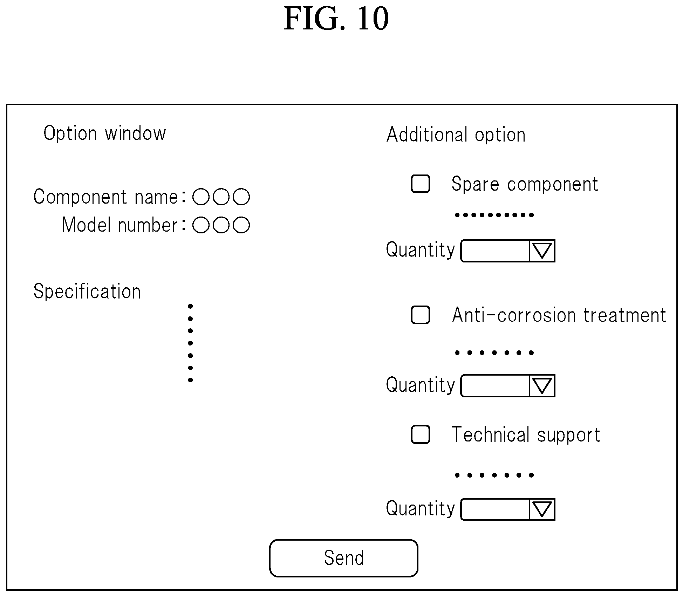

   Fig. 10 is a diagram illustrating an example of an option window according to one embodiment of the present disclosure.
[Fig. 11]

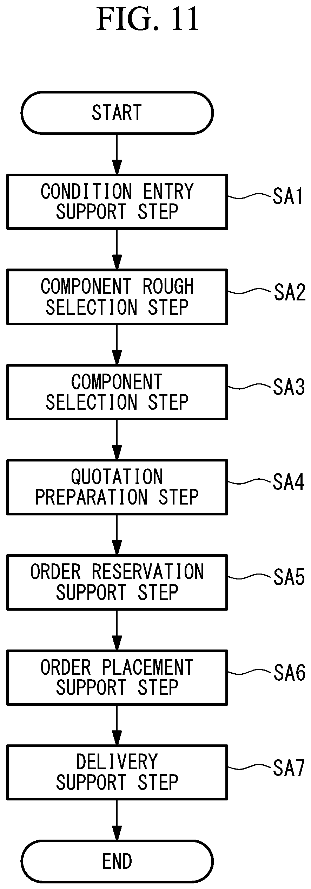

   Fig. 11 is a flowchart illustrating an example of the process procedure of a component purchase support method according to one embodiment of the present disclosure.
[Fig. 12]

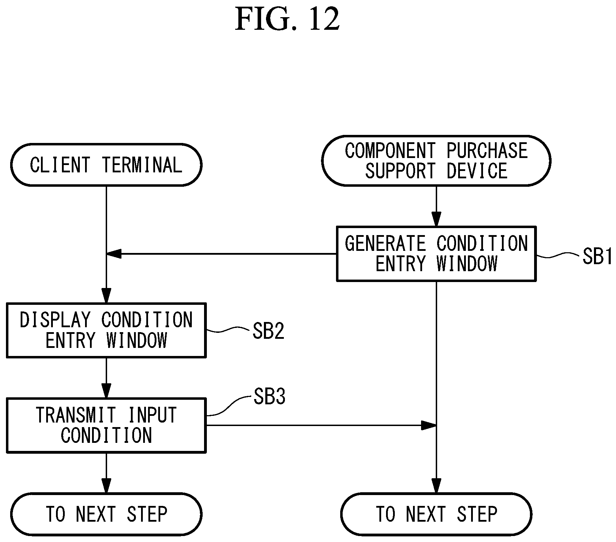

   Fig. 12 is a flowchart illustrating an example of the process procedure of a condition entry support step according to one embodiment of the present disclosure.
[Fig. 13]

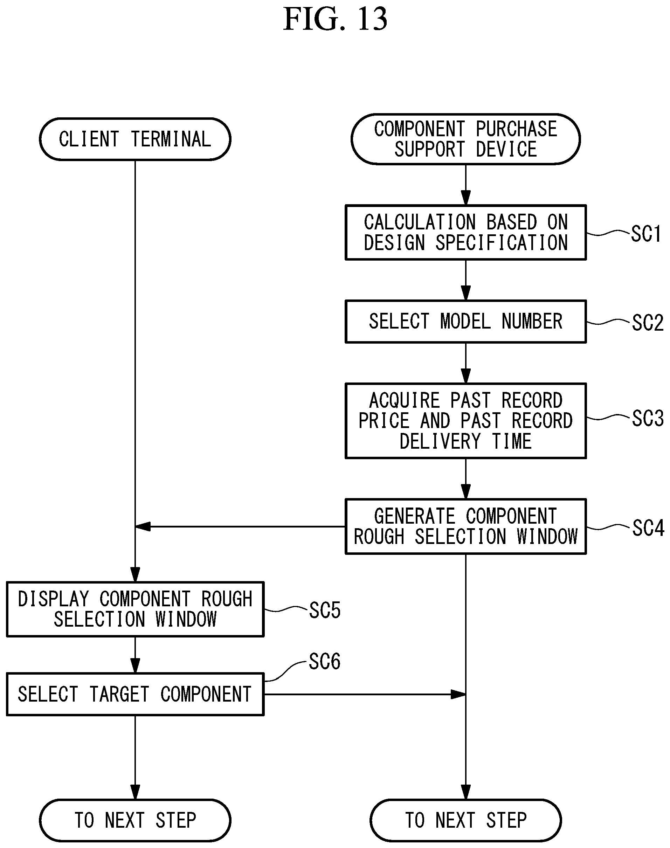

   Fig. 13 is a flowchart illustrating an example of the process procedure of a component rough selection step according to one embodiment of the present disclosure.
[Fig. 14]

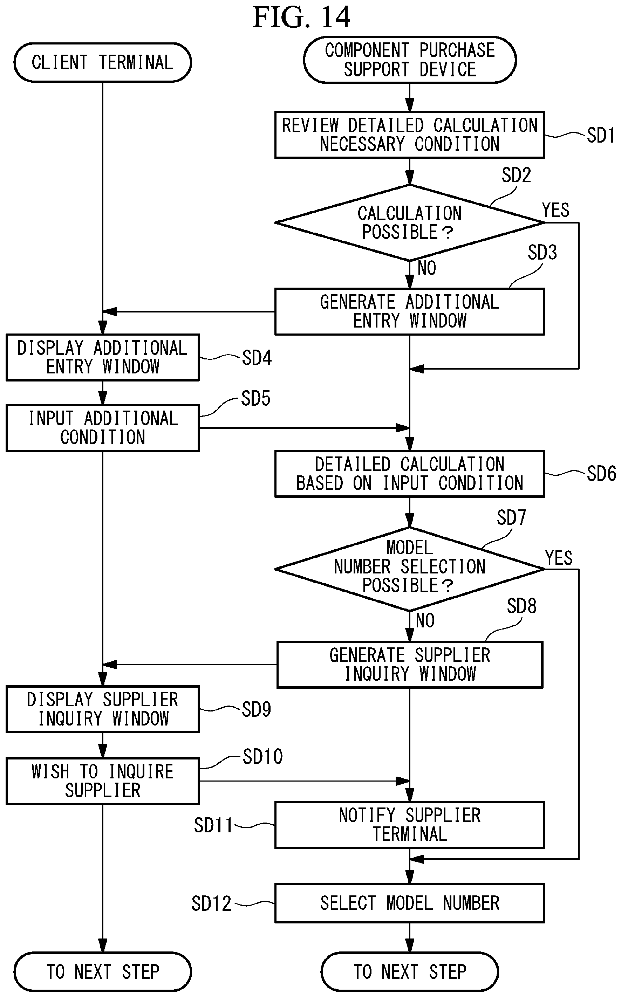

   Fig. 14 is a flowchart illustrating an example of the process procedure of a component selection step according to one embodiment of the present disclosure.
[Fig. 15]

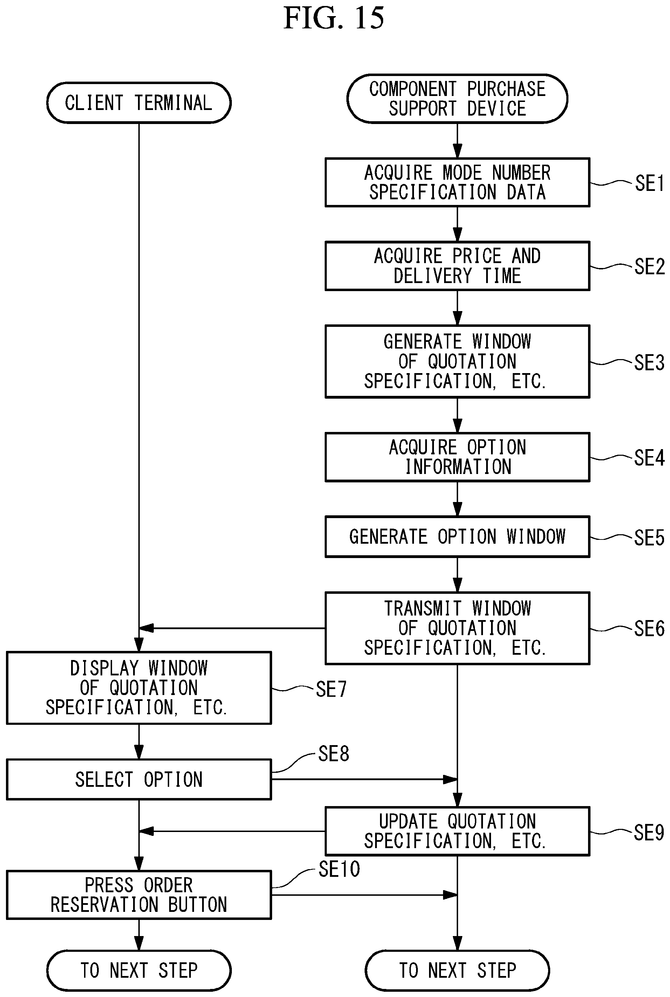

   Fig. 15 is a flowchart illustrating an example of the process procedure of a quotation preparation step according to one embodiment of the present disclosure.
[Fig. 16]

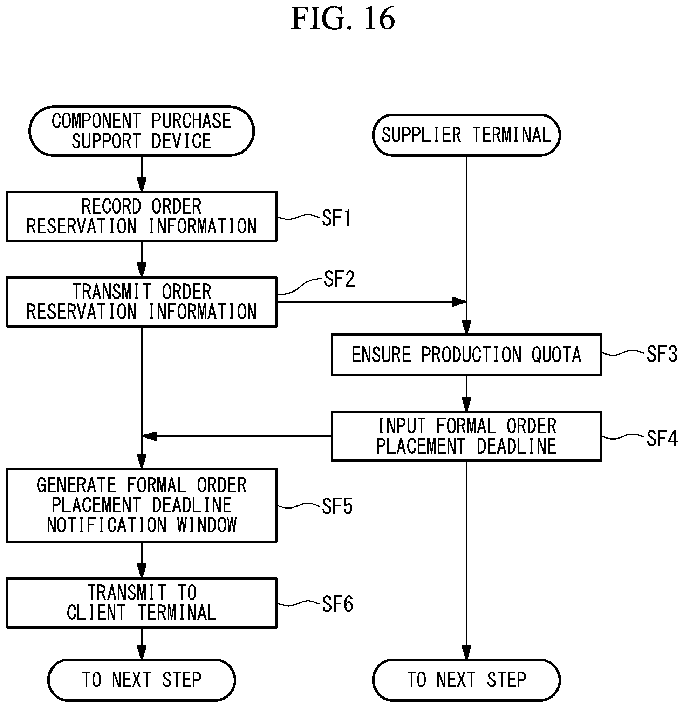

   Fig. 16 is a flowchart illustrating an example of the process procedure of an order reservation support step according to one embodiment of the present disclosure.
[Fig. 17]

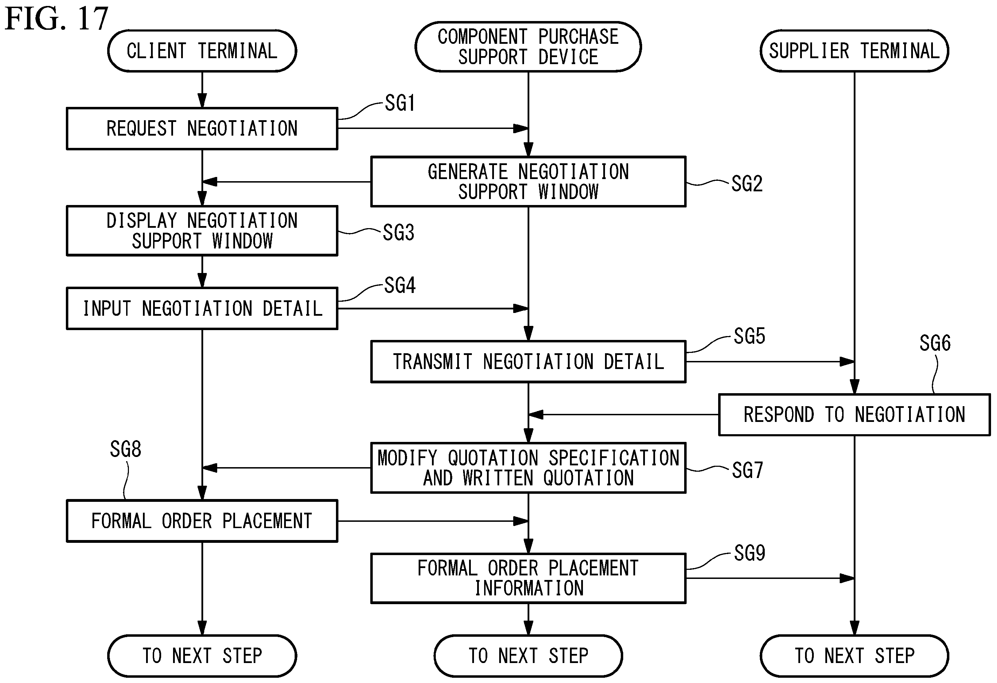

   Fig. 17 is a flowchart illustrating an example of the process procedure of an order placement support step according to one embodiment of the present disclosure.
[Fig. 18]

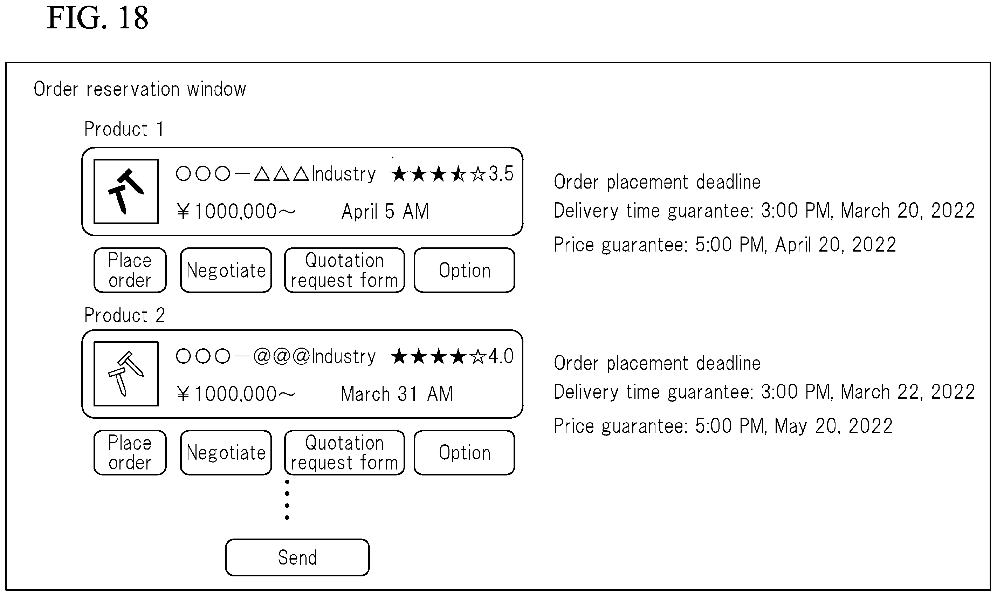

   Fig. 18 is a diagram illustrating an example of an order reservation window according to one embodiment of the present disclosure.
[Fig. 19]

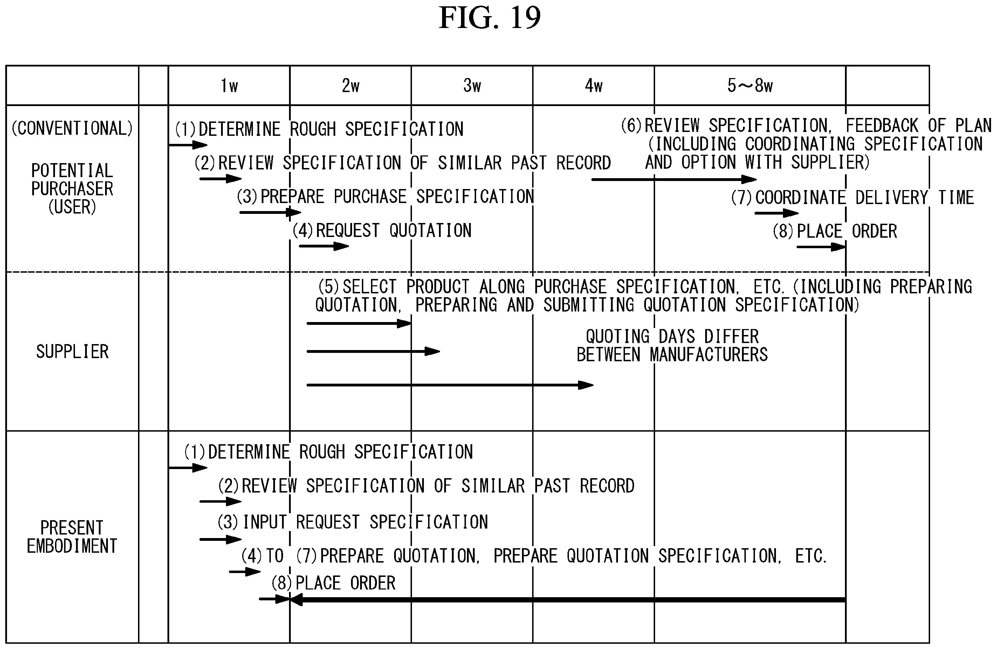

   Fig. 19 is a diagram illustrating comparison between a time table from condition entry to an order placement for a plant component in a conventional art and a time table from condition entry to an order placement when a plant component is arranged by using the component purchase support device according to the present embodiment.
[Fig. 20]

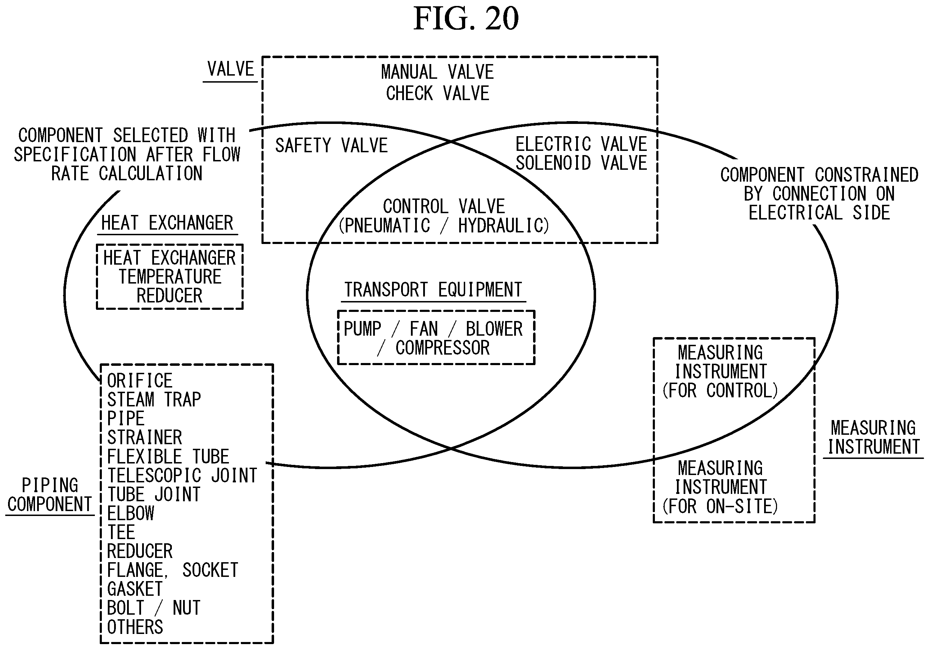

   Fig. 20 is a diagram illustrating relationships between plant components according to one embodiment of the present disclosure.

### [Description of Embodiments]

One embodiment of a component purchase support device, a component purchase support method, and a component purchase support program according to one embodiment of the present disclosure will be described below with reference to the drawings.

The component purchase support device according to the present embodiment is a device suitable for purchase support of plant components that require engineering in a fluid transport system, for example. Herein, the "engineering in a fluid transport system" means, for example, performing planning, design, and procurement of a system that is incorporated in a plant and transports a medium such as a gas, a liquid, or a solid. The medium may be a gas-liquid mixture based medium (for example, a steam-drain mixture based medium), a gas-solid mixture based medium (for example, pulverized coal transported by air), a liquid-solid mixture based medium (for example, slurry), or the like.

The "plant component" means, for example, a fluid transfer element and equipment used in a fluid transport system. The fluid transfer element may be, for example, a pipe, a telescopic and flexible tube (a bellows, a flexible tube, or the like), a bent tube, an elbow, a joint, or a valve (a manual valve, an electric valve, a solenoid valve, a control valve, a safety valve, a check valve, or the like). The equipment may be, for example, a measuring instrument, transport equipment, a strainer, an accumulator, a steam trap, a temperature reducer, or the like. An example of the measuring instrument may be a pressure gauge, a thermometer, a flowmeter, or the like. An example of the transport equipment may be a pump, a fan, a blower, a compressor, a conveyer, or the like. Peripheral components may be heat-insulating equipment (heat-insulating member), a piping support member, a support stand for equipment, a steel frame, or the like.

Fig. 20 illustrates relationships between plant components.

In plant components, there are components whose specifications can be selected only after completion of design with consideration on operation of a plant, such as on a range of change in the flow rate. Such plant components may be, for example, piping components such as safety valves, control valves (including pneumatic valves and hydraulic valves), heat exchangers, temperature reducers, orifices, steam traps, or the like or transport equipment such as pumps, fans, blowers, compressors, or the like.

Further, there are plant components that require electrical connection for power supply, measuring and control signals, or the like, and such plant components may be, for example, solenoid valves, electric valves, control valves (including pneumatic valves and hydraulic valves), transport equipment such as pumps, fans, blowers, compressors, conveyers, or measuring instruments.

A component purchase support device 1 that supports purchase of plant components as described above will be described below with reference to the drawings.

Fig. 1 is a diagram illustrating a network configuration of the component purchase support device 1 according to the present embodiment. As illustrated in Fig. 1, the component purchase support device 1 can be connected to a client terminal 70 and a supplier terminal 80 via a network and is configured so that information can be transmitted and received therebetween. An example of the network may be Wi-Fi, a mobile communication system (3G, 4G, 5G, 6G, LTE, or the like), a wireless local area network (LAN), a wired LAN, or the like.

Although a single client terminal 70 and a single supplier terminal 80 are illustrated as an example in Fig. 1, the number of client terminals 70 and the number of supplier terminals 80 connected to the component purchase support device 1 are not limited to this example.

Although the component purchase support device 1, the client terminal 70, and the supplier terminal 80 are connected to each other via the same network in Fig. 1, the connection is not limited to this example. For example, the network connected to the component purchase support device 1 and the client terminal 70 and the network connected to the component purchase support device 1 and the supplier terminal 80 may differ from each other.

Fig. 2 is a schematic configuration diagram illustrating an example of the hardware configuration of the component purchase support device 1. The component purchase support device 1 is a so-called server (computer) and, as illustrated in Fig. 2 for an example, includes, as the primary configuration, a CPU (processor) 11, an auxiliary storage device 12 for storing a program executed by the CPU 11 (for example, the component purchase support program) or the like, a main memory 13 functioning as a work area during execution of each program, and a communication device 14 for connection to a network, and these devices are connected to each other via a bus 18. The component purchase support device 1 may further include an input unit 15 such as a keyboard, a display unit 16, or the like. The auxiliary storage device 12 stores, for example, OS for controlling the entire component purchase support device 1, various drivers for operating peripherals as hardware, an application and various data or files for implementing the component purchase support device 1, or the like. An example of the above auxiliary storage device 12 may be a semiconductor memory, a magnetic disk, a magneto-optical disk, or the like.

The client terminal 70 is an information processing device used by a user who wishes to purchase a plant component. The client terminal 70 may be, for example, a desktop PC, a laptop PC, a tablet PC, a tablet terminal, a mobile phone terminal, a smartphone, or the like. Since the configuration of the client terminal 70 is well known, the detailed description thereof will be omitted, however, the client terminal 70 has a CPU, an auxiliary storage device, a main memory, a communication device, and an input unit in the same manner as the component purchase support device 1 described above. Furthermore, the client terminal 70 has a display unit (a liquid crystal display, an organic EL display, or the like). Furthermore, the client terminal 70 may have a microphone or a speaker. The auxiliary storage device stores, for example, OS for controlling the client terminal 70, such as Windows (registered trademark), iOS (registered trademark), Android (registered trademark), or the like, various drivers for operating the peripherals as hardware, an application and various data or files for implementing the function of the client terminal 70 described later, or the like.

The supplier terminal 80 is an information processing device used by a supplier that sells plant components. Herein, "supplier" means, for example, a company that manufactures and sells plant components. When a manufacturing company of plant components sells its own products through a trading company as an agent, a set of the manufacturing company and the trading company for the plant components is referred to as "supplier".

The supplier terminal 80 may be, for example, a desktop PC, a laptop PC, a tablet PC, a tablet terminal, a mobile phone terminal, a smartphone, or the like. Since the configuration of the supplier terminal 80 is well known, the detailed description thereof will be omitted, however, the supplier terminal 80 has a CPU, an auxiliary storage device, a main memory, a communication device, and an input unit in the same manner as the component purchase support device 1 described above. Furthermore, the supplier terminal 80 has a display unit (a liquid crystal display, an organic EL display, or the like). Furthermore, the supplier terminal 80 may have a microphone or a speaker. The auxiliary storage device stores, for example, OS for controlling the entire supplier terminal 80, such as Windows (registered trademark), iOS (registered trademark), Android (registered trademark), or the like, various drivers for operating the peripherals as hardware, an application and various data or files for implementing the function of the supplier terminal 80 described later, or the like.

Next, functions of the component purchase support device 1 according to the present embodiment will be described. Fig. 3 is a function diagram illustrating an example of functions of the component purchase support device 1 according to the present embodiment. A series of processes for implementing each function illustrated below are stored in the auxiliary storage device 12 of the component purchase support device 1 as a program (for example, the component purchase support program) as an example, and various functions are implemented when the CPU 11 loads this program into the main memory 13 and executes the program. For the program, a form in which the program is installed in advance in the auxiliary storage device 12 of the component purchase support device 1, a form in which the program is provided stored in a computer readable storage medium, a form in which the program is delivered via a wired or wireless communication scheme, or the like may be applied. The computer readable storage medium may be a magnetic disk, a magneto-optical disk, a CD-ROM, a DVD-ROM, a semiconductor memory, or the like.

As illustrated in Fig. 3, the component purchase support device 1 includes a model number database 21, a price and delivery time database 22, a price and delivery time past-record database 23, and an option database 24.

In the model number database 21, model numbers of plant components sold by suppliers and specification data thereon are stored in association with each other on a supplier basis. In the model number database 21, required field lists in which each plant component or each model number and required fields required in model number selection are registered in association with each other may be stored on a supplier basis.

In the price and delivery time database 22, delivery times and prices of plant components are stored on a supplier basis. For example, the price and delivery time database 22 is a database referenced by a quotation preparation unit 35 described later. The prices and delivery times stored in the price and delivery time database 22 can be updated in any time by each supplier. This enables the quotation preparation unit 35 to use the latest data to prepare a written quotation. Accordingly, a reliable written quotation can be provided to the user. In addition to the prices of the plant components, expenses required for shipping of a product or the like may be registered as the price.

Association between internal data in the price and delivery time database 22 is not particularly limited. That is, any association can be configured as long as information on a supplier, a price, and a delivery time can be acquired when a model number of a plant component is specified, and the specific association between internal data is not particularly limited. For example, the price and delivery time database 22 may include a database in which each plant component provided by a supplier and the delivery time thereof are associated with each other and a database in which each plant component provided by the supplier and the price thereof are associated with each other, respectively, in a separate manner.

In the price and delivery time past-record database 23, past-record data on delivery times and prices for each plant component or each model number are stored on a supplier basis. For example, the price and delivery time past-record database 23 is a database referenced by a component rough selection unit 32 described later. Actual delivery times and prices of plant components sold in the past by respective suppliers are stored in the price and delivery time past-record database 23, and in this regard, the price and delivery time past-record database 23 differs from the price and delivery time database 22 in which suppliers can change information at any time. In the price and delivery time past-record database 23, standard prices or standard delivery times provided by suppliers may be further stored on a plant component basis or on a model number basis.

Association between internal data in the price and delivery time past-record database 23 is not particularly limited. That is, any association can be configured as long as information on a supplier, past record data on a price, and past record data on a delivery time can be acquired when a model number of a plant component is specified, and specific association between internal data is not particularly limited. For example, the price and delivery time past-record database 23 may include a database in which each plant component provided by a supplier and past record data on the delivery time thereof are associated with each other and a database in which each plant component provided by the supplier and past record data on the price thereof are associated with each other, respectively, in a separate manner.

In the option database 24, option information in which plant components and option information are associated with each other is stored on a supplier basis. An example of the option information may be an optional product (such as consumables, a special tool), dispatchment of an instructor in installation, operation adjustment in test run, a technical support service such as trouble shooting, or a specification upgrade service (for example, building-up against corrosion, high-grade coating, additional inspection, submission of drawings, or the like). For example, the option database 24 is a database referenced by an option creation unit 45 described later.

When the number of registered options exceeds a predetermined number, information on the past selection rate (a ratio that the user who purchased the plant component in question in the past selects addition of the option in question) may be registered in association with each option. Accordingly, when the option information is presented to the user, a top predetermined number of options may be selected and acquired in descending order of the selection rate, and the acquired option information may be presented to the user.

In the option database 24, detailed information may be registered in association with various options. For example, the detailed information on spare components may be a delivery time, a price, a replacement time, or the like. The detailed information on the technical support or the option service may be a time to provide the service, a price, a feature, an advantage, a notice, or the like.

Although the case where the component purchase support device 1 has the model number database 21, the price and delivery time database 22, the price and delivery time past-record database 23, and the option database 24 within the device is described as an example in the present embodiment, the disclosure is not limited to this example. For example, some or all of these databases may be stored in another server connected via a network. Furthermore, these data may be distributed to and stored in a plurality of servers.

That is, data stored in these databases are not necessarily required to be stored in the component purchase support device 1 and can be configured in any manner as long as these pieces of information can be acquired.

The component purchase support device 1 includes a condition entry support unit 31, the component selection unit 34, and the quotation preparation unit 35 as the primary configuration. The component purchase support device 1 may further include the component rough selection unit 32, a component selection assist unit 33, an order reservation support unit 36, an order placement support unit 37, and a delivery support unit 38. Each unit will be described below in detail.

### [Condition entry support unit]

The condition entry support unit 31 allows the user to input at least any one of a name of a component that the user wishes to purchase, a fluid type, a design temperature, a design pressure, an operation temperature, and an operation pressure as an input condition. For example, the condition entry support unit 31 generates window data used for displaying a condition entry window, which is used for input these condition entries, on the client terminal 70 and transmits the generated window data to the client terminal 70.

Fig. 4 illustrates an example of the condition entry window. The condition entry window illustrated in Fig. 4 as an example is provided with fields for inputting various conditions such as an applicable standard, a delivery time, a required drawing, required inspection, and coating in addition to the conditions described above.

Further, the condition entry window may be provided with entry fields for the acceptable latest delivery time, the acceptable highest price, constraints of connection (for a dimension, a joint type, and others, including not only for the mechanical side but also for the electrical side), various information about delivery such as a destination, a packaging specification, a transportation method, or the like that the user wishes.

The above applicable standard is provided to enable the user to select the standard that should be applied in the design phase, for example, to enable the user to select any of various standards such as JIS, ISO, ASME, EN, IEEE, or the like. More specifically, individual standard such as High Pressure Gas Safety Act, Electricity Business Act, Construction code for pressure vessels, or the like may be selectable. Since the concept on safety factors or set values differs between respective standards, entry of these conditions can eliminate time and effort for the user to examine the conformity of standards by itself.

When the acceptable latest delivery time or the acceptable highest price is input as a condition, delivery times or prices that do not meet the user's wish can be excluded. This can improve the user convenience and reduce the computational processing load at the component purchase support device 1.

For the condition entry, a plurality of entry modes may be provided. For example, a plurality of entry modes may be presented to the user to allow the user to select any of these entry modes. Further, the condition entry support unit 31 may generate the condition entry window in accordance with the entry mode selected by the user and transmit the generated condition entry window to the client terminal 70.

An example of the entry modes may be a detailed entry mode, a simple entry mode, a model number entry mode, or the like.

The detailed entry mode is, in general, a mode for inputting all the conditions required when a supplier selects a component. This mode is intended for users who are familiar with engineering in fluid transport systems.

The simple entry mode is a mode intended for unfamiliar users and provided with entry items narrowed down to primary items. For example, in this mode, some of the conditions that would otherwise be input in the detailed entry mode are omitted.

The model number entry mode is a mode for inputting a supplier name or a model number. This mode is a mode targeted to users who wish to purchase the same plant component as the existing plant component or users who have researched supplier catalogs or the like in advance and decided a desired model number, regardless of the detailed entry mode or the simple entry mode described above.

As described above, a plurality of entry modes are provided and configured for the user to select a desired entry mode, and this makes it possible to provide services in accordance with user's engineering capabilities and needs.

### [Entry assist unit]

The condition entry support unit 31 may include an entry assist unit 41 (see Fig. 3), for example. The entry assist unit 41 preliminarily inputs one or more input conditions that have not been input by the user out of a plurality of input conditions based on the past accumulated data or the initial value set in advance.

For example, the entry assist unit 41 has initial values for design conditions or operation conditions in advance and preliminarily inputs these initial values when no input condition is input for the design condition or the operation condition. Further, instead of the initial values, representative values based on the past record values or the like may be preliminarily input.

Furthermore, the entry assist unit 41 may pose a question to the user in accordance with a predetermined question flow and allow the user to input a missing input condition in an interactive way through which the user answers to the question.

When preliminary input is performed by the entry assist unit 41, the preliminarily input condition may be presented to the user to allow the user to check whether the preliminarily input condition is not out of user's expectation.

For example, since plant components have not only constraint conditions linked with the components such as the shape, the strength, or the like but also constraint conditions for a fluid flowing inside, a certain level of experience is required to select suitable components. Thus, inexperienced users do not know what kind of conditions to be set, and it is sometimes difficult to set conditions by themselves. In such a case, by providing the entry assist unit 41 to support user's entry, it is possible for even users with limited experience of engineering in fluid transport systems to input suitable conditions required in arranging plant components.

Further, the entry assist unit 41 may suggest an applicable standard. For example, the entry assist unit 41 may determine laws, standards, or the like considered required to be applied in accordance with conditions such as a plant type, user registration information (information on the company to which the user belongs), a fluid type, a pressure, or the like and inquire the user as to whether or not it is required to apply such laws, standards, or the like.

For example, set values may be differently taken or considered in accordance with standards. For example, for safety valves, although JIS standard is applied, set values or errors of blowout pressures are differently taken between Electricity Business Act and Construction code for pressure vessels. Even in such a case, the entry assist unit 41 suggests applicable standards, this enables the user to arrange a plant component in accordance with a required standard, and it is possible to suppress a selection error and selection rework due to a difference in standards.

### [Automatic entry unit]

The condition entry support unit 31 may further include an automatic entry unit 42, for example. For example, the automatic entry unit 42 analyzes electronic data attached by the user in the condition entry window (for example, scanned data of design document such as an input specification or specification table, a photograph of a name plate of an existing plant component, or the like) by using artificial intelligence (AI) and thereby automatically inputs the input condition.

The automatic entry unit 42 may read a condition value such as a maximum value, a mean value, a minimum value, or the like from operation data (for example, a time-series data list, a trend graph, or the like) attached by the user and automatically input the read condition value.

As described above, because the automatic entry unit 42 is provided, the user is no longer required to manually input condition values, and the user's burden for entry can be reduced.

### [Component rough selection unit]

The component rough selection unit 32 selects plant components conforming to the input condition from the model number database 21, further acquires prices and delivery times of the selected multiple plant components from the price and delivery time past-record database 23, selects plant components to be presented as candidate components based on the acquired prices and delivery times, and transmits information on the selected multiple plant components to the client terminal 70. Accordingly, a component rough selection window is displayed on the client terminal 70.

More specifically, the component rough selection unit 32 first references the model number database 21 based on design conditions (a design temperature, a design pressure, an operation temperature, an operation pressure, or the like) out of the input various conditions and selects model numbers of plant components conforming to the design condition. Furthermore, for plant components requiring fluid calculation, the component rough selection unit 32 determines a design specification by performing fluid calculation in accordance with the applicable standard (JIS, ASME, or the like) input as the input condition or a general calculation formula and selects the model numbers of plant components conforming to the determined design specification from the model number database 21.

Furthermore, the component rough selection unit 32 acquires past record prices and past record delivery times for the selected model numbers from the price and delivery time past-record database 23 associated with the suppliers for the selected model numbers. Instead of past record prices and past record delivery times, a standard price and a standard delivery time may be acquired. A standard packaging cost or a standard transportation cost may also be included in the price.

For example, conventionally, when plant components for small lots (small quantity or low price) are arranged, since the sales or the profit to be obtained for time and effort of preparing a quotation is smaller, some suppliers may present quotations with a higher price than a standard price or a longer delivery time than a standard delivery time. Accordingly, the component rough selection unit 32 is configured to display past record values (for example, past record prices at quotation or past record prices at order receipt, past record delivery times at quotation or past record delivery times at order receipt). Accordingly, suppliers that presented higher price quotations or longer delivery times for many times in the past are less likely to be displayed in upper ranks in the display of price ranking or delivery time ranking described later. Thus, such suppliers will be dropped from selection by users and will not be selected as candidates for an order placement. This makes it difficult for suppliers to present excessively high prices or late delivery times, and as a result, this leads to the fact that the users can obtain products inexpensively and quickly.

In response to acquiring selection of model numbers and the past record prices and past record delivery times for the selected model numbers in such a way, the component rough selection unit 32 generates the component rough selection window based on the acquired information and transmits the generated window data to the client terminal 70. Accordingly, the component rough selection window is displayed on the client terminal 70. That is, model numbers of a plurality of plant components selected based on the input condition are displayed as candidate components on the component rough selection window.

Fig. 5 illustrates an example of the component rough selection window. In the component rough selection window illustrated in Fig. 5 as an example, model numbers of a plurality of plant components selected based on the input condition are displayed as candidate components. Further, information on a supplier is added to each model number.

Herein, the number of model numbers of components and the number of suppliers to be presented to the user can be determined to any number. For example, the number of model numbers of components is preferably five or greater. The number of suppliers is preferably three or greater.

For example, the condition used for selection may be displayed in the component rough selection window. At this time, a condition preliminarily input in the condition entry support unit 31 may be displayed in a different display manner from the condition input by the user. An example of the different display manner may be to use different colors, to display a message, or the like. This enables the user to easily distinguish the condition preliminarily input in the component purchase support device 1.

The component rough selection window is provided with an input part BT1 used for displaying a component comparison window in which these candidate components are compared by predetermined evaluation items. When the input part BT1 is operated (pressed or clicked) by the user, the component rough selection unit 32 transmits information on the component comparison window to the client terminal 70. Accordingly, the component comparison window is displayed on the client terminal 70. Herein, the transmission timing of the information on the component comparison window is not particularly limited. For example, the component rough selection unit 32 may transmit the information on the component comparison window to the client terminal 70 together with the information on the component rough selection window.

Fig. 6 illustrates an example of the component comparison window. In the component comparison window illustrated in Fig. 6 as an example, model numbers of five plant components are displayed in order respectively for evaluation items of prices, delivery times, evaluation scores, low energy losses, and conformity degrees. Detailed information on the selected component is displayed on the right side in this window.

In the component comparison window, products may be displayed in the order such as price ranking, delivery time ranking, customer review score ranking, low energy loss ranking, conformity degree ranking, recommended ranking, or the like. Further, the window may be configured to enable the user to select any of these items.

The evaluation ranking is set based on customer review scores about suppliers provided by users, for example. The customer review score includes, for example, an average user evaluation score for a full evaluation score of 5.0. Further, user feedbacks may be included. Further, evaluation scores that reflect consideration on evaluation results provided by an administrator based on past transaction records or supplier audits may be used.

The low energy loss ranking represents the ascending order of the energy loss caused by conversion of kinetic energy into frictional heat or the like, for example, which is typically the ascending order of the pressure loss value of the internal fluid. In such a case, data on energy losses (for example, such as pressure loss values relative to a defined flow rate) are registered on a component basis, and it is possible to determine the display order by reading and comparing energy loss data associated with selected components.

For example, when the pressure loss increases, the flow rate for a flow available with the same configuration decreases. To have a flow with the same flow rate, it is required to increase the flow path such as increasing the pipe diameter, increasing the valve size, or the like. Thus, this results in disadvantages of increased constraints on the space, increased initial costs, or the like. Further, although it is possible to have a flow with the same flow rate by increasing the ejection pressure of a pump, in other words, by increasing the motor power, such a case also results in disadvantageous of increased initial costs, increased running costs, or the like. It is desirable to suppress the pressure loss to the minimum as long as it is reasonable. Thus, by presenting components to the user with the low energy loss ranking, it is possible for the user to consider a component in terms of the installation space or the initial costs.

A scheme to calculate a pressure loss may be the following scheme.
(1) Calculating a pressure loss by slide calculation with a square of flow rate from a pressure loss value (presented by a supplier) relative to a representative flow rate.
(2) Calculating a pressure loss based on a calculation formula of a pressure loss relative to a flow rate. For example, in a case of a valve, the pressure loss is calculated based on a Cv value, and in a case of a flowmeter, the pressure loss is calculated based on a calculation formula written in a manual.
(3) Finding a pressure loss coefficient by using a Moody chart based on a Reynolds number and a pipe inner surface roughness and then calculating a pressure loss based on the loss coefficient and a flow rate.
(4) Calculating a pressure loss based on a flow rate and a loss coefficient already determined by the type and the shape of the plant component. (This is pressure loss calculation for an elbow or the like. Several types of loss coefficients are known, and may be selected in accordance with the user's needs.)

The conformity degree ranking is for displaying plant components in descending order of matching degree to the required specification, for example. More specifically, out of the specification determination parameters, plant components are displayed in descending order of the ratio of items for which user input values have been used. The matching degree is calculated, for example, by using a factor of the ratio of items for which user input values have been used and the weighting value thereof, the degree of closeness of the maximum operation pressure and temperature of the plant component to the condition of "an operation condition + margin (typically, about +5%)", or the like. For example, this conformity degree ranking is a display form that is effective when the input condition is insufficient.

The recommended ranking is, for example, for comprehensively evaluating the price, the delivery time, the evaluation score, the low energy loss, the conformity degree, and the like and displaying plant components in descending order of the overall evaluation value. For example, respective evaluation values about the price, the delivery time, the evaluation score, the low energy loss, and the conformity degree may be substituted in a predetermined evaluation value calculation formula, thereby respective overall evaluation values may be calculated on a selected component basis, and plant components may be displayed in descending order of the calculated overall evaluation value. The evaluation value calculation formula can be set in any manner. For example, evaluation of each item may be rated on a 10-point scale, and a sum value of these rated values may be used, or a weighting factor may be set for each item, and a sum value of products of the rated values and the weighting factors for each item may be used.

Further, the past record or the past record of similar design by the administrator of the component purchase support device 1, the past record from the operation of the component purchase support device 1, or the like may be used for machine learning on the overall evaluation values, and the plant components may be displayed in descending order of the closeness to the machine learning result as the recommended ranking.

In the component rough selection window (Fig. 5) or the component comparison window (Fig. 6), past record prices and past record delivery times may be displayed in association with each model number. In this display, the past record price and the past record delivery time data may be displayed with margins. For example, data from the lowest price to the highest price interposing the average price, or data with 20% price to 80% price excluding 20% on the lower price side and 20% on the higher price side may be displayed. When the user desires, a histogram may be displayed.

Accordingly, the user is able to select a target product for the detailed calculation taking variation ranges of the price and the delivery time into consideration in addition to obtaining the advantageous effects described above. As a result, the user convenience is improved. Further, the display forms described above may be displayed in combination as appropriate.

The component comparison window illustrated in Fig. 6 is an example, and the window is not limited thereto. For example, delivery times may be displayed in the field for the delivery time ranking. Further, evaluation scores may be displayed in the field of the evaluation ranking. Further, energy loss values may be displayed in the field for low energy loss ranking. Further, conformity degree evaluation values may be displayed in the field for the conformity degree ranking, respectively.

### [Component selection assist unit]

The component selection assist unit 33 generates window data used for displaying a selection assist window, which is for assisting user's selection of a plant component, on the client terminal 70.

For example, when receiving a display request for a selection assist window from the client terminal 70, the component selection assist unit 33 generates and transmits the selection assist window to the client terminal 70. For example, the component comparison window (see Fig. 6) is provided with an input part BT2 used for displaying a selection assist window for assisting component selection.

When any of the candidate components is selected by the user and the input part BT2 is operated by the user, a display request for the selection assist window is transmitted to the component purchase support device 1.

In response to receiving the display request for the selection assist window, the component selection assist unit 33 identifies suppliers of the candidate components selected by the user, searches the model number database 21 of the identified suppliers, and extracts model numbers having a specification close to that for the selected model number. Furthermore, the component selection assist unit 33 acquires the price and the delivery time for each model number from the price and delivery time database 22 or the price and delivery time past-record database 23.

Subsequently, the component selection assist unit 33 generates window data related to the selection assist window in which property information, prices, delivery times, and operation conditions and design conditions for each of the plurality of extracted model numbers are associated with each other and transmits the generated window data to the client terminal 70.

Accordingly, in the selection assist window, the model number of the candidate component selected by the user, the specification information on the model numbers provided by a single supplier having a specification close to that on the model number of the candidate component, information on the price and the delivery time associated with each model number, and the operation condition and the design condition are displayed.

Fig. 7 illustrates an example of the selection assist window. In Fig. 7, parameters specific to the selected component are indicated on an orthogonal coordinate system, and furthermore, the model number selected by the user and properties related to at least one model number associated with the model number and the specification are displayed on this orthogonal coordinate system. More specifically, Fig. 7 is a diagram illustrating an example of the selection assist window related to a product "valve", and in the orthogonal coordinate system with the horizontal axis representing the pressure and the vertical axis representing the temperature, properties of four model numbers A to D are indicated. Furthermore, in this orthogonal coordinate system, the operation condition and the design condition are displayed.

When at least one of the price and the delivery time is associated with each model number, information thereon may be displayed in the selection assist window.

Note that the selection assist window described above is an example, and the window is not limited thereto. For example, the orthogonal coordinate system is not limited to be of two dimensions and may be of multiple dimensions. For example, an axis representing another parameter specific to a component, such as the flow rate, the pressure loss, or the like, may be added. For example, when parameters that are important in selection of a component are selected in advance on a plant component basis, information that is useful in selection of a component can be presented to the user. Further, instead of the axis representing a parameter related to the property of a component, an axis representing the price, the delivery time, or the like may be added.

Further, the component selection assist unit 33 may propose a recommended model number instead of or in addition to the graph described above.

Furthermore, in the selection assist window, the design condition may be configured to be able to be changed by the user. For example, when the design condition is changed by the user in the selection assist window illustrated in Fig. 7 (when the design condition is moved from the coordinate displayed before the selection assist is used to the coordinate displayed after the selection assist has been used in Fig. 7), the component selection assist unit 33 re-selects candidate components matching the moved design condition and re-creates a selection assist window based on newly selected candidate components. Accordingly, the candidate component selected based on the changed design condition and the specification information on the model number provided by a single supplier having a specification close to that on the model number of the candidate component are presented to the user.

For example, in the initial phase of engineering in fluid transport systems, acceptable operation conditions and design conditions have a margin, and there is room for a change in many cases. In contrast, in the phase of arranging plant components, specific operation conditions and design conditions are often set and presented to the supplier for facilitating the supplier to perform selection and for preventing the supplier from selecting a product that does not meet the user's request. In such a way, originally, even when there is a margin in the acceptable operation condition and design condition, the margin for conditions has to be intentionally reduced for reducing required time or rework of the process for arrangement. Thus, even when there is room for selecting a more advantageous product in particular in terms of the price or the delivery time, the user may arrange a plant component without being aware of such room.

When the design condition is close to a boundary between model numbers, the user may have trouble deciding whether or not to choose a model number having a large margin over the design condition. In such a case, for example, a choice of a model number with a large margin will give the specification a margin but result in a high price and a long delivery time in general, and a choice of a model number with a small margin will tend to result in a low price and a short delivery time but may give the specification a smaller margin and result in a smaller tolerance against variation in the plant operation conditions. Eventually, the user will comprehensively determine and select a model number based on the specification, the price, and the delivery time. In the typical arrangement process, however, when the user does not identify the possibility beforehand that the design condition is close to the boundary between model numbers and does not get quotations in advance for both the model number with a large margin and the model number with a small margin, only the quotation for either one of the model numbers will be presented in general. In such a case, it is necessary to further get a quotation for the model number which was not presented, which will require additional man-hours and time. Further, it is also much time-consuming for suppliers to provide a plurality of quotations for comparison. That is, even when written quotations for a plurality of components for comparison are prepared and presented, the component to be selected is only one of them, and thus, the effort and time spend on preparing the written quotations for the unselected components will be wasted.

To address such a problem, in the present embodiment, the component selection assist unit 33 as described above is provided to present the selection assist window to the user. Accordingly, it is possible to visually present the property for each model number and the design condition and operation condition to the user. As a result, the user is able to intuitively recognize the degree of adjustment on the design condition that enables selection of a different model number and select a model number that meets the user's needs.

Furthermore, in the present embodiment, the user is able to change the design condition by easy operation of moving a design condition displayed in the selection assist window to desired coordinates. Furthermore, when the design condition has been changed, selection of a candidate component based on the changed design condition is performed again. In such a way, since selection of a candidate component based on the changed design condition is automatically performed, the user is able to set the operation condition or the design condition having a large margin as much as possible without worrying about the required time or rework of the process for arrangement of a plant component. Further, the user is able to reconsider the operation condition or the design condition while viewing the price or the delivery time for each model number and select a model number that better meets the user's needs.

The selection assist window illustrated in Fig. 7 is an example, the window may be displayed in other forms. For example, as illustrated in Fig. 8, the window may be displayed in a form of displaying the properties of each component as a region having a certain range.

### [Component selection unit]

The component selection unit 34 (see Fig. 3) includes a necessary condition determination unit 43, for example.

The necessary condition determination unit 43 determines whether or not the input condition satisfies a necessary condition required for selecting a model number of a plant component. Specifically, the necessary condition determination unit 43 acquires a required field list identified based on a supplier and a plant component from the model number database 21 for each plant component selected by the user. Subsequently, the necessary condition determination unit 43 compares the acquired required field list with the input condition input in the condition entry window and determines whether or not there is missing information in performing detailed specification calculation described later.

If there is missing information as a result of the above, the necessary condition determination unit 43 creates an additional entry window used for urging the user to input the missing condition and transmits the created additional entry window to the client terminal 70. Accordingly, the additional entry window for allowing the user to perform additional entry is displayed on the client terminal 70. This makes it possible to allow the user to additionally input the input condition related to the missing condition.

Subsequently, the component selection unit 34 performs detailed calculation of the specification about a plant component of a model number selected by the user based on the input condition input by the user.

First, based on a supplier name and a model number for a plant component selected as a purchase candidate by the user, the component selection unit 34 performs detailed calculation by using a calculation formula to be applied to the model number in question of the supplier in question and determines whether or not the plant component in question satisfies the required specification. If the plant component satisfies the required specification, the component selection unit 34 determines this plant component. If the plant component does not satisfy the required specification, the component selection unit 34 performs the detailed calculation by using a calculation formula to be applied to a model number having a close condition to the model number in question (similar model number) and determines whether or not the plant component of the similar model number satisfies the required specification. Further, for example, the component selection unit 34 may inquire the supplier as to whether or not the supplier has a plant component that satisfies the required specification from an inquiry support unit 44 described later.

The above calculation may be performed by the component purchase support device 1 or may be performed by each supplier terminal 80. When each supplier has its own calculation tool, this calculation tool may be used.

In the component purchase support device 1, selection criteria and calculation formulae may differ for respective suppliers and, if calculations of respective suppliers are attempted at once in selection of a plant component, the calculation load becomes enormous, and a problem of a longer time required for review of the specification and the quotation is expected.

Accordingly, in the present embodiment, rough calculation is performed by the component rough selection unit 32 by using an applicable standard or a general calculation formula, in other words, a predetermined calculation formula not relying on suppliers, and information on plant components selected as a result of this rough calculation is presented to the user together with a rough quotation. Then, for the plant component selected as a target by the user out of the presented plant components, the component selection unit 34 performs the detailed calculation using the design parameters, the calculation formulae, or the like selected on a supplier basis and determines whether or not the plant component selected by the user is a component that satisfies the required specification based on the input condition. Then, if the plant component selected by the user is a component that satisfies the required specification, a detailed quotation of the component is prepared and presented to the user together with the component information. This solves the problem of data processing load and processing time. In such a way, because the configuration of the two-step quotation (rough quotation + detailed quotation) is introduced, the configuration to narrow down the suppliers and the model numbers that proceed with the detailed calculation can be incorporated based on the result of rough quotation, and this can suppress the calculation load to the minimum while meeting the user's needs.

If the two-step quotation were not employed and quotation were made with a single step from the beginning, when the search condition is erroneous or insufficient or when the user's preference changes, it is necessary to re-select a plant component from the beginning, which lacks efficiency. In contrast, the configuration of two-step quotation is introduced as with the present embodiment, thereby plant components selected by rough specification calculation are presented to the user in the step of rough quotation, therefore the processing load can be reduced, and the efficiency can be increased.

The component selection unit 34 (see Fig. 3) includes the inquiry support unit 44, for example.

For example, the inquiry support unit 44 creates and transmits a supplier inquiry window (not illustrated) to the client terminal 70. This supplier inquiry window includes, for example, the input condition input by the user, a temporary consideration result, and user information (user company name, contact information, or the like). The supplier inquiry window is provided with an input part used for requesting to inquire a supplier (for example, a select button) and an input part used for inputting not wishing to inquire a supplier (for example, an end button).

The user operates the inquiry send button when wishing to inquire in the supplier inquiry window displayed on the client terminal 70. Accordingly, supplier inquiry information is transmitted to a supplier via the component purchase support device 1. In response to receiving an inquiry request, the supplier then contacts a customer via a phone call, an email, or the like and provides information necessary for selection of plant components or the like to the user.

In such a way, the inquiry support unit 44 that supports the user to directly inquire a supplier is provided, and this enables the user to contact the supplier soon and obtain necessary information.

For example, there are cases where the plant engineering is so complex that selection of a model number or the like in the component purchase support device 1 is difficult. In such a case, because the inquiry support unit 44 is provided, a plant component matching the user's needs can be arranged with the cooperation of a supplier. This can expand the range of products that can be arranged from the component purchase support device 1 as a starting point and improve the convenience.

Furthermore, there are advantages below also for suppliers.

For example, it is possible to have contact with prospective customers by opening a store in the component purchase support device 1. That is, it is said that customers who wish to inquire suppliers from the supplier inquiry window are highly motivated for the purchase. Accordingly, the supplier can increase the possibility of order receipt by responding sincerely to the inquiry from the user. Further, because the necessary condition determination unit 43 is provided, the input condition required for calculating a detailed specification registered by a supplier has already been input. Thus, by providing such information to the supplier, it is possible to reduce the burden on the supplier side that responds to inquiries.

### [Quotation preparation unit]

The quotation preparation unit 35 again acquires the specification of the plant component of a selected model number when the model number of the plant component is selected by the component selection unit 34 and prepares a quotation specification based on the specification. The quotation specification is a document in which quotation conditions, in other words, delivery conditions are written. It is not necessarily required to present the quotation specification in a form of a document, and it is possible to only display the quotation condition and the delivery condition on a screen in accordance with which the user wishes.

Furthermore, the quotation preparation unit 35 acquires the price and the delivery time of the plant component in question from the price and delivery time database 22. At this time, not only the price of the plant component but also all the prices required for delivery of the plant component (for example, packaging costs, transportation costs, or the like) may be included.

In such a case, the shortest delivery time and the price associated therewith may be registered to the price and delivery time database 22. The lowest price and the delivery time associated therewith may be registered to the price and delivery time database 22. Accordingly, for example, when the user has enough time before purchasing the component, the user is able to purchase the component with a delayed delivery time but a lower price.

Further, a graph or a table in which delivery times and prices are associated with each other may be created so that the user can select a preferred combination of a delivery time and a price. This enables the user to select a suitable combination taking both aspects of the price and the delivery time into consideration.

As described above, since the quotation preparation unit 35 that prepares a quotation specification and a written quotation based on information of the price and delivery time database 22 is provided, the burden on the supplier side required for preparing the written quotation and the like can be reduced. Further, suppliers can set prices and delivery times dynamically in accordance with the operation status or the like such as a busy period or an off period by updating the information in the price and delivery time database 22.

Further, also for users, there are advantages of being able to select a plurality of purchase candidates, being able to quickly acquire a written quotation, or the like.

Fig. 9 illustrates an example of a quoted result display window. As illustrated in Fig. 9, in the quoted result display window, a supplier name, an evaluation review score about a supplier, a quotation amount, and a delivery time are displayed for each plant component. When a plurality of components are displayed in the quoted result display window, the user selects an order target component.

The quoted result display window is provided with an input part BT5 used for making an order reservation, an input part BT6 used for displaying a quotation specification, and an input part BT7 used for selecting an option for each plant component. In the quoted result display window, when the input part BT7 is operated, an option window described later is displayed on the client terminal 70.

### [Option creation unit]

The quotation preparation unit 35 may include an option creation unit 45. For example, when the input part BT7 used for displaying the option window is operated by the user in the quoted result display window, the option creation unit 45 acquires option information associated with a plant component selected by the user from the option database 24, generates window data of the option window used for presenting the acquired option information to the user, and transmits the generated window data to the client terminal 70.

An example of the option information may be an optional product (such as consumables, a special tool), dispatchment of an instructor in installation, operation adjustment in test run, a technical support service such as trouble shooting, or a specification upgrade service (for example, building-up against corrosion, high-grade coating, additional inspection, additional submission of drawings, or the like).

When the number of registered options is large and it is difficult to present all the options to the user, information on the past selection rate (a ratio that the user who purchased the plant component in question in the past selects addition of the option in question) may be registered in association with each option in advance, and a top predetermined number of options may be selected in descending order of the selection rate and presented to the user.

Fig. 10 illustrates an example of the option window. In the option window illustrated in Fig. 10, spare components, anti-corrosion treatment, and technical support can be selected as an option. Further, detailed information on each option is displayed on the lower side of each option item.

Because the option information is presented to the user, the user is able to purchase a spare component or the like at the same time, and the user convenience is improved. Further, when, out of coating, inspection, submission of drawings, and the like, items that the user did not select but may have forgotten to select are also presented as the option information, it is possible to reduce the user from forgetting to place an order.

Further, because spare components, various services, or the like are presented to the user, it is also possible to for suppliers to increase an opportunity of order receipt and expect an increase in sales.

The option creation unit 45 may acquire detailed information associated with various options from the option database 24 and transmit the detailed information to the client terminal 70. For example, the detailed information on spare components may be a delivery time, a price, a replacement time, or the like. The detailed information on the technical support or the option service may be a time to provide the service, a price, a feature, an advantage, a notice, or the like.

As described above, because the option creation unit 45 presents the detailed information to the user, there is an advantage that the user is able to purchase a necessary option item with understanding of its necessity. By displaying the detailed information (for example, a feature, an advantage, or the like) in association with each option, the supplier can attract user interest and expect an increased possibility of order receipt.

When an option is selected by the user in the option window, the quotation preparation unit 35 modifies the quotation specification and the written quotation based on the information on the selected option and transmits the modified quotation specification and the written quotation to the client terminal 70. Accordingly, every time an option is selected by the user, the information thereon will be quickly reflected to the quotation specification and the written quotation displayed on the client terminal 70.

### [Order reservation support unit]

When an order reservation for a plant component is requested from the client terminal 70, the order reservation support unit 36 transmits information about the order reservation to the supplier terminal 80. The information about an order reservation may be, for example, a date and time of the order reservation, a planned time for a formal order placement, a model number of a plant component, user information, or the like.

In response to receiving the information about the order reservation, the supplier terminal 80 secures the plant component based on the information about the order reservation and performs preparation so as to be able to arrange the plant component as soon as the formal order is placed by the user.

At this time, on the supplier side, for example, the quotation specification and the quoted price may be maintained to the presented details as a quotation validity deadline for a certain period (for example, one week, which may be determined by each supplier for each product) after the order reservation. Further, a service to ensure inventories or a production quota within a certain period (for example, several hours) to promise the presented delivery time may be provided.

Furthermore, a deadline reflecting consideration on the order reservation information or its own resource may be examined by a supplier, and information on the delivery time or the like may be presented to the user via the component purchase support device 1.

As described above, the order reservation support unit 36 is provided, and this makes it possible to ensure a quoted price and a delivery time to be maintained for a certain period. Accordingly, for example, there is an approval flow in the organization to which the user belongs, even when it takes a certain time before placing a formal order placement for reasons of internal coordination or the like, the user is able to purchase a plant component at the condition provided when making the order reservation. As a result, the user convenience is improved. Further, on the supplier side, since it is possible to follow up the user's order via the component purchase support device 1 by relying on the expected delivery time for a formal order placement, the quotation validity deadline, or the like managed in the component purchase support device 1, an increased possibility of order receipt can be expected.

### [Order placement support unit]

When a formal order placement of a plant component for which an order reservation has been made is requested from the client terminal 70, the order placement support unit 37 transmits information about the order to the supplier terminal 80 of the plant component for which the order reservation has been made.

### [Negotiation support unit]

The order placement support unit 37 may include a negotiation support unit 46 that supports a negotiation between a user and a supplier of the plant component for an order placement of a plant component. The negotiation support unit 46 supports a negotiation of a price or a delivery time between a user and a supplier.

In this situation, it is preferable to set a condition for enabling negotiation to protect the supplier from an excessive request from the user. The condition for enabling negotiation may be, for example, a minimum order quantity or a minimum purchase price. Further, the upper limit may be provided for the number of times of negotiations in a certain period on a user basis. Further, in such a case, when an order is finally placed, the negotiation related to the order placement may be excluded from the count.

Further, when a predetermined discount condition is satisfied (for example, such as when the number of arranged components exceeds a predetermined number), a certain amount of price (for example, a% of the total amount) may be automatically discounted.

As described above, the condition for enabling negotiation is provided, and thereby an excessive burden on the supplier side can be reduced.

As described above, because the negotiation support unit 46 is provided, even when a plant component is arranged via the component purchase support device 1, the user is able to negotiate with a supplier side for a price or a delivery time in the same manner as in the typical procurement process, and the user convenience can be enhanced. In some companies, a negotiation of prices or delivery times is one of the rolls of the procurement department, the procurement department is requested for results of cost reduction, and some companies require such a negotiation in the procurement department. Because the negotiation support unit 46 is provided, it is possible to acquire even such a company as the customer of the component purchase support device 1.

### [Delivery support unit]

The delivery support unit 38 supports procedures or the like related to delivery of plant components on a formal order placement. For example, the delivery support unit 38 supports coordination of receiving plant components shipped to users. Specifically, the delivery support unit acquires shipping information such as a scheduled delivery time, cargo shape and weight, the number of trucks, delivery slip data, driver information and contact information, carrying company and vehicle number information, or the like from the supplier terminal 80 and transmits the acquired shipping information to the client terminal 70.

Since the driver information and contact information, vehicle number information, and the like may be unavailable until the day of delivery, these pieces of information may be sequentially provided to the user from fixed information. Further, when there is a missing item or an inquiry, the user may inquire the supplier via the delivery support unit 38.

As described above, the delivery support unit 38 is provided, and this makes it possible to eliminate each-time adjustment for delivery that has been conventionally a burden for both the user and the supplier.

Further, since information about the cargo shape can be provided to the user in advance, the user is able to coordinate acceptance preparation or the like beforehand with enough time. This is particularly useful when a crane or a forklift is required for accepting the plant component, such as when the plant component is a large object, a heavy object, or the like. Further, while transactions via phone calls, emails, or the like are conventionally used, since information is managed in the component purchase support device 1 in an integrated manner, the administrative burden on the user can be reduced.

This can improve the user convenience.

An information identification tag or a barcode may be attached to delivered components from suppliers to support management of delivered components performed by the user. Further, such identification information may be managed in the component purchase support device 1.

For example, when order placements of a plurality of plant components are arranged at once, these components may be delivered from different suppliers. In such a case, it is not rare that products are delivered on different delivery dates from respective suppliers. The delivered products may be placed in a temporary storage site. The user often stores the products packed until all the components arrive taking the subsequent transportation into consideration, and it is difficult to identify the components from the appearance thereof. Further, when the user has arranged order placements of a plurality of plant components at once, the user has arranged these components as a set and thus has little awareness for individual components. Thus, it is expected that there are problems of unidentifiability of the use of the delivered components, difficulty in management of the components, or the like.

In such a case, when a tag for identifying each delivery component is attached to the delivered component and the tag is read, information such as the name, the use, the specification (the weight, dimensions), and the like of the component can be acquired, as described above, and therefore, the information on the delivered component can be easily and quickly obtained.

The component purchase support device 1 causes a list of arranged components of a system set provided to the user and a window in which the components in question are highlighted in the assembly drawing or three-dimensional drawing to be displayed on the client terminal 70, thereby can visually present, to the user, the use or the feature of the components on hand, and can facilitate the user to identify the components. Furthermore, such information can also be utilized for supporting user's assembly work. In addition to the display of the assembly drawing or the three-dimensional drawing described above, displaying the weight or the centroid or displaying a notice in assembly will contribute to the smooth execution of user assembly operation. In particular, when a system set is purchased via the component purchase support device 1, since information necessary for assembly is managed by the component purchase support device 1, the service as described above can be provided.

Next, a component purchase support method according to the present embodiment will be described with reference to Fig. 11 to Fig. 17. A series of processes illustrated below are stored as a program (for example, a component purchase support program) in the auxiliary storage device 12 of the component purchase support device 1 and performed when the CPU 11 loads this program into the main memory 13 and executes the program.

Fig. 11 is a flowchart illustrating an example of the process procedure of the component purchase support method according to the present embodiment. As illustrated in Fig. 11, the component purchase support method is performed in the order of a condition entry support step (SA1), a component rough selection step (SA2), a component selection step (SA3), a quotation preparation step (SA4), an order reservation support step (SA5), an order placement support step (SA6), and a delivery support step (SA7), for example. Each step will be described below in detail.

### [SA1: Condition entry support step]

Fig. 12 is a flowchart illustrating an example of the process procedure of the condition entry support step according to the present embodiment. As illustrated in Fig. 12, the component purchase support device 1 first generates a condition entry window and transmits window data on the generated condition entry window to the client terminal 70 (SB1). Accordingly, the condition entry window as illustrated in Fig. 4 as an example is displayed on the client terminal 70 (SB2).

At this time, information on a plant component that the user wishes to purchase may be acquired in advance, and the input conditions may be differentiated in accordance with the acquired plant component. For example, formats of the condition entry window are registered on a plant component basis, and the condition entry window in accordance with the plant component may be transmitted to the client terminal 70.

For example, when a safety valve is purchased, a nominal diameter, a fluid type, a set pressure, a set pressure management value (setting of error), a fluid temperature, a maximum operation pressure, a connection form on the inlet side, a material, a required blowoff rate, a closing pressure, or the like may be input as conditions. Further, since the set pressure management value differs in accordance with an applicable standard, the applicable standard may be preferably included in the input conditions.

In this condition entry window, the user inputs conditions and performs transmission operation. Accordingly, the input conditions input by the user are transmitted to the component purchase support device 1 (SB3). In this condition entry support step, the entry support to the user performed by the entry assist unit 41 and the automatic entry of conditions performed by the automatic entry unit 42 described above may be performed, if necessary.

Accordingly, when the condition entry support step ends, the process then proceeds to the component rough selection step.

### [SA2: Component rough selection step]

Fig. 13 is a flowchart illustrating an example of the process procedure of the component rough selection step according to the present embodiment.

As illustrated in Fig. 13, in response to accepting the input conditions described above, the component purchase support device 1 determines a design specification by performing calculation in accordance with the applicable standard (JIS, ASME, or the like) input as the input condition (SC1) and selects model numbers of a plant component conforming to the determined design specification from the model number database 21 for a plurality of suppliers (SC2).

For example, in a case of a safety valve used for steam, suppliers select candidate model numbers based on information on the nominal diameter, the fluid temperature, the maximum operation pressure, or the like input as the input conditions. Next, the nominal blowoff rate is calculated by using a blowoff rate determination pressure determined by the set pressure and the applicable standard (JIS if no entry is made), a coefficient determined by the condition of the fluid during blowoff (mainly depending on a temperature, a pressure, or the like) (a representative value if no number is input), a nominal demotion blowoff coefficient corresponding to the model number of the plant component (a typical value is written in JIS B 8210 and this value is used), and a blowoff area (the blowoff area is roughly determined in accordance with a nominal diameter, and a typical value in accordance with the nominal diameter can be used, for example). The calculated nominal blowoff rate and the required blowoff rate are compared. If the nominal blowoff rate is greater than or equal to the required blowoff rate, it is determined that the required specification is satisfied, and the plant component in question is selected as a component candidate. If the nominal blowoff rate is less than the required blowoff rate, the plant component in question is excluded from component candidates.

Subsequently, the component purchase support device 1 acquires the past record prices and the past record delivery times for the selected model number from the price and delivery time past-record database 23 associated with suppliers of the selected model number (SC3), generates the component rough selection window and the component comparison window based on the acquired information, and transmits the generated window data to the client terminal 70 (SC4). In this step, when the number of selected component candidates is greater than a predetermined number, the candidate components may be excluded or included so that the number of plant components presented as component candidates is below a predetermined number in view of prices, delivery times, or the like.

The client terminal 70 displays the component rough selection window (SC5). Accordingly, on the client terminal 70, as illustrated in Fig. 5 as an example, model numbers of a plurality of plant components selected based on the input conditions are displayed as the candidate components. In this component rough selection window, when the input part BT1 used for displaying the component comparison window is operated by the user, the component comparison window as illustrated in Fig. 6 is displayed.

In this component comparison window (see Fig. 6), when the input part BT2 used for performing a display request for the selection assist window is operated, the component purchase support device 1 generates and transmits the component selection assist window as illustrated in Fig. 7 to the client terminal 70. When the change button BT3 used for requesting a change of input conditions is operated because the user wishes to change the currently input conditions (including preliminarily input conditions), the component purchase support device 1 returns to step SB1 (see Fig. 12), and generates and transmits the condition entry window to the client terminal 70.

When at least one plant component (model number) is selected in the component rough selection window (see Fig. 5) and the send button BT8 is operated or when at least one plant component (model number) is selected in the component comparison window (see Fig. 6) and the target component select button BT4 used for selecting a target component is operated (SC6), the selected model number information is transmitted to the component purchase support device 1. In such a way, in response to receiving the model number information on the target component selected by the user, the component purchase support device 1 ends the component rough selection step and proceeds with the process to the component selection step.

### [SA3: Component selection step]

Fig. 14 is a flowchart illustrating an example of the process procedure of the component selection step according to the present embodiment.

As illustrated in Fig. 14, in response to accepting the model number information on the target component described above, the component purchase support device 1 acquires a required field list identified based on a supplier and a plant component from the model number database 21 for each plant component selected by the user. Subsequently, the acquired required field list is compared with the input condition input in the condition entry window, and it is determined whether or not there is missing information in performing detailed specification calculation described later (SD1).

If there is no missing information as a result (SD2: YES), the process proceeds to step SD6. In contrast, if there is missing information (SD2: NO), the component purchase support device 1 creates an additional entry window used for urging the user to input the missing condition and transmits the created additional entry window to the client terminal 70 (SD3).

Accordingly, the additional entry window for allowing the user to perform additional entry is displayed on the client terminal 70 (SD4). When an additional condition is input by the user, the additional condition is transmitted to the component purchase support device 1 (SD5).

In such a way, when the conditions required to perform detailed calculations are met, the component purchase support device 1 then performs the detailed specification calculation based on the input condition (SD6). Specifically, for each plant component selected by the user, parameters or calculation formulae selected by suppliers are used to perform the detailed specification calculation on the plant component in question.

For example, in a case of a safety valve used for steam, a nominal blowoff rate is calculated by using a blowoff rate determination pressure determined by the set pressure and the applicable standard, a coefficient determined by the condition of the fluid during blowoff (mainly depending on the temperature, the pressure, or the like), a nominal demotion blowoff coefficient unique to the plant component in question, and a blowoff area. Herein, the nominal demotion blowoff coefficient unique to the plant component in question is a value uniquely held by the supplier of the plant component in question as a test value.

Once the detailed specification calculation is performed in such a way, it is determined whether or not the specification obtained as a calculation result satisfies the required specification (SD7). If the required specification is satisfied as a result, it is determined that the model number selection is available (SD7: YES), and the process proceeds to step SD12. In contrast, if the required specification is not satisfied, the detailed specification calculation is performed on a similar model number set for each model number. This detailed specification calculation is repeatedly performed until a candidate similar model number satisfies the required specification or until it is determined that none of the similar model numbers satisfies the required specification. Then, if it is determined that any of the similar model numbers satisfies the required specification, the process proceeds to step SD12, and if none of the similar model numbers satisfies the required specification, it is determined that the model number selection is unavailable (SD7: NO), and the process proceeds to step SD8.

For example, in the case of the safety valve used for steam described above, the nominal blowoff rate, which is calculated using a nominal demotion blowoff coefficient that differs for each supplier and a blowoff area that differs for each supplier and model number, is compared to a required blowoff rate. That is, in the detailed specific calculation, unlike the case of the rough specification calculation, unique values held by the supplier are used as the nominal demotion blowoff coefficient and the blowoff area, and thereby more accurate nominal blowoff rate is calculated. If the nominal blowoff rate is greater than or equal to the required blowoff rate as a result, it is determined that the required specification is satisfied, and it is determined that the model number selection is available. In contrast, if the nominal blowoff rate is less than the required blowoff rate, it is determined that the required specification is not satisfied, and the process proceeds to determination targeting the similar model number as described above.

In step SD8, the supplier inquiry window is generated and transmitted to the client terminal 70. Accordingly, the supplier inquiry window is displayed on the client terminal 70 (SD9).

When wishing to inquire the supplier, the user makes input to the effect and performs transmission operation. Accordingly, information indicating that the user wishes to inquire the supplier is transmitted to the component purchase support device 1 (SD10). The component purchase support device 1 notifies the supplier terminal 80 that the user wishes to inquire the supplier (SD11). In response to receiving an inquiry request, the supplier contacts a customer via a phone call, an email, or the like and provides information necessary for selection of plant components or the like to the user. Accordingly, the user is able to contact the supplier soon and obtain necessary information.

When model numbers of the plant components satisfying the required specification are selected in such a way (SD12), the process proceeds to the next step of the quotation preparation step.

### [SA4: Quotation preparation step]

Fig. 15 is a flowchart illustrating an example of the process procedure of the quotation preparation step according to the present embodiment.

As illustrated in Fig. 15, in response to selection of model numbers of plant components, the component purchase support device 1 again acquires the specifications of the plant components of the selected model number (SE1), and furthermore acquires prices and delivery times of the plant components in question from the price and delivery time database 22 (SE2). Then, quotation specifications and written quotations are generated by using the acquired information (SE3). Specifically, window data for displaying the quotation specifications and the written quotations are generated.

Subsequently, the component purchase support device 1 acquires option information associated with the plant component from the option database 24 (SE4) and generates window data on the option window by using the acquired option information (SE5). The window data for displaying the generated quotation specifications, written quotations, and option information are then transmitted to the client terminal 70 (SE6).

Accordingly, the quoted result display window (see Fig. 9) for displaying the quotation specification or the like is displayed on the client terminal 70 (SE7). Once an order target component is selected out of a plurality of candidate components and further the input part BT7 used for displaying the option window is operated by the user in this quoted result display window, the option window (see Fig. 10) is displayed. Once one or plurality of options or the like related to the order target component are selected and the transmission button is operated in this option window, the information on the selected order target component and the selected option information are transmitted to the component purchase support device 1 (SE8). In response to receiving the selected option information, the component purchase support device 1 updates the quotation specification and the written quotation based on this option information and transmits the updated quotation specification or the like to the client terminal 70 (SE9). The component purchase support device 1 performs the above process each time the option information is selected by the user, and thereby the quoted result display window (see Fig. 9) reflecting the latest option information is displayed on the client terminal 70.

Subsequently, once the user confirms the latest quotation specification, written quotation, and option information and operates the input part (order reservation button) BT5 on the quoted result display window, the order reservation information on the plant component in question is transmitted from the client terminal 70 to the component purchase support device 1 (SE10).

In response to receiving the order reservation information, the component purchase support device 1 proceeds with the process to the next step of the order reservation support step.

### [SA5: Order reservation support step]

Fig. 16 is a flowchart illustrating an example of the process procedure of the order reservation support step according to the present embodiment.

In response to accepting the order reservation information, the component purchase support device 1 records the accepted order reservation information (SF1) and then transmits the order reservation information to the supplier terminal 80 (SF2). In response to receiving the order reservation information, the supplier terminal 80 ensures a production quota for the plant component (SF3). Subsequently, once a formal order placement deadline is input by a person in charge in the supplier and transmission operation is performed, the information on the formal order placement deadline is transmitted to the component purchase support device 1 (SF4). In response to receiving the information on the formal order placement deadline, the component purchase support device 1 generates an order reservation window for notification of the formal order placement deadline (SF5) and transmits this order reservation window to the client terminal 70 (SF6). Accordingly, the component purchase support device 1 proceeds with the process to the next step of the order placement support step.

Fig. 18 is a diagram illustrating an example of the order reservation window. As illustrated in Fig. 18, the order placement deadline is displayed for each selected component (product 1, product 2) on the order reservation. In Fig. 18, as the order placement deadline, a delivery guaranteed deadline and a price guaranteed deadline are displayed.

In the order reservation support step described above, the process of ensuring a production quota (SF3) may be omitted. Regardless of whether or not a production quota is ensured, an order reservation window is displayed on the client terminal 70 that indicates a standard formal order placement deadline of the delivery time and the price to be obeyed (determined by suppliers in advance, typically on the same day for the delivery time, and typically within one month for the price) for a plant component for which an order reservation is accepted. In such a case, for example, for a product that the supplier determines that the probability of order receipt is high in particular, a person in charge in the supplier may ensure a production quota, then examine the order placement deadline, again set a formal order placement deadline of the delivery time and the price to be obeyed, and contact the user to follow up for order receipt.

For the product for which the order placement deadline has passed without a formal order being placed even after an order reservation has been made, the supplier side may reinstate the order reservation and again propose the order to the user. For a product for which an order reservation has been accepted, in other words, a product in a shopping cart, since the user has intention of purchasing the product, the probability of order receipt considered high. Therefore, at the supplier, it is worth taking time and effort to follow up the user about the product.

### [SA6: Order placement support step]

Fig. 17 is a flowchart illustrating an example of the process procedure of the order placement support step according to the present embodiment.

The user reviews a written quotation or the like, and when wishing to negotiate with the supplier before proceeding with a formal order placement process, performs operation for making a negotiation request via the client terminal 70. Accordingly, the negotiation request is transmitted to the component purchase support device 1 (SG1).

In response to receiving the negotiation request, the component purchase support device 1 generates and transmits a negotiation support window to the client terminal 70 (SG2). Accordingly, the negotiation support window is displayed on the client terminal 70 (SG3). The user inputs negotiation details and performs transmission operation. Accordingly, the negotiation details are transmitted from the client terminal 70 to the component purchase support device 1 (SG4). The component purchase support device 1 transmits the negotiation details to the supplier terminal 80 (SG5). A person in charge in the supplier studies the negotiation details, inputs responses for a quoted price and an expected delivery time, and performs transmission operation. Accordingly, the negotiation response is transmitted to the component purchase support device 1 (SG6).

In response to receiving a negotiation response, the component purchase support device 1 modifies the quotation specification and written quotation based on the response and transmits the modified quotation specification and written quotation to the client terminal 70 (SG7).

Accordingly, the quotation specification and the written quotation reflecting the negotiation result are displayed on the client terminal 70. Such a negotiation transaction between the user and the supplier may be repeated for several times. If the negotiation breaks down, modification of the quotation specification or the like will not be performed in the component purchase support device 1.

The user reviews the modified quotation specification and written quotation and, if there is no problem, performs operation of a formal order placement. Accordingly, the formal order placement information is transmitted to the component purchase support device 1 (SG8). The component purchase support device 1 transmits the formal order placement information to the supplier terminal 80 (SG9). Accordingly, the order placement information arrives at the supplier side, and the process proceeds to the next step of the delivery support step.

### [SA7: Delivery support step]

In the delivery support step, the component purchase support device 1 supports delivery of the plant component on the formal order placement. When the component purchase support device 1 receives a user inquiry about delivery, the component purchase support device 1 transmits inquiry information to the supplier terminal 80 and thereby supports transactions about the delivery between the user and the supplier.

As described above, according to the component purchase support device 1, the component purchase support method, and the component purchase support program of the present embodiment, a user is allowed to input at least any one of a name of a component that a user wishes to purchase, a fluid type, a design temperature, a design pressure, an operation temperature, and an operation pressure as input conditions, plant components conforming to the input conditions are selected with reference to the model number database 21, and all or some of the plurality of selected plant components are displayed as candidate components on the client terminal 70. Further, prices and delivery times of the candidate components selected by the user are acquired from the price and delivery time database 22, and the acquired prices and the delivery times are displayed on the client terminal 70.

Accordingly, with only simple user operation of inputting the input condition, plant components conforming to the input condition are automatically selected, and all or some of the plant components are presented as candidate components. This enables the user to select a desired one out of these candidate components. Further, since the prices and the delivery times are also presented for each candidate component, it is possible to easily arrange a desired plant component comprehensively under consideration on the price and the delivery time. Accordingly, the period from entry of conditions to delivery of a plant component can be effectively shortened.

Fig. 19 is a diagram illustrating comparison between an example of a time table from condition entry to an order placement for a plant component in a conventional art and a time table from condition entry to an order placement when a plant component is arranged by using the component purchase support device 1 according to the present embodiment. As illustrated in Fig. 19, conventionally, it takes about one week or longer from (1) determining a rough specification, through (2) reviewing the specification for similar past records of plant components purchased in the past, through (3) preparing a purchase specification, to (4) making a quotation request. For example, in a case of a safety valve, it is required to prepare a purchase specification based on the specification of an attaching part (for example, a pressure vessel tube base), the required specification of the safety valve, or the like, which takes time for review before making a quotation request.

Further, even after a quotation request is made to a supplier, at the supplier, (5) operation of selecting a product along the purchase specification, reviewing the specification, preparing a quotation, or the like will take place. Thus, it may require about one week to four weeks before obtaining a quotation response. Further, even after the quotation response arrives, it is required to perform (6) review of the specification or feedback of the plan and (7) delivery coordination, and then (8) an order is placed. Consequently, it may require about six weeks to eight weeks after a rough specification is determined and before an order is placed. This is typically due to the fact that the person in charge of quotation in the supplier handles multiple cases in parallel and this causes waiting time or that the person in charge of quotation in the supplier focuses on inquiries for more prospective cases or the like and this prevents the operation from smoothly proceeding.

In contrast, according to the component purchase support device 1 of the present embodiment, with entry of conditions, model numbers of plant components suitable for design conditions or the like are automatically presented as component candidates. Further, since all the information required for an order placement such as specification data, delivery times, prices, or the like of the component candidates can be reviewed, the period from condition entry to an order placement will be about one week. Accordingly, for example, a period can be shortened by about seven weeks compared to the conventional art. The waiting time occurring due to human intervention (for example, business activity between a user and a supplier, business activity between a supplier sales person and a supplier technician, business activity between a trading company and a supplier if a trading company intervenes, or the like) is minimized by the component purchase support device 1, and thereby the above advantageous effect can be obtained.

Although the present disclosure has been described above with reference to the embodiments, the technical scope of the present disclosure is not limited to the scope described in the above embodiments. Various alternation or improvement can be added to the above embodiments within the scope not departing from the spirit of the disclosure, a form to which such alternation or improvement is added is also included in the technical scope of the present disclosure. Further, the above embodiments may be combined as appropriate.

Further, the flow of the process described in the above embodiments is also an example, and an unnecessary step may be deleted, a new step may be added, or the order of processes may be exchanged within the scope not departing from the spirit of the present disclosure.

For example, for a series of processes illustrated in Fig. 11, not all of the processes are required to be performed, and some of the processes can be omitted. For example, the component rough selection step may be omitted, and selection of a component in the component selection step may be performed based on the input conditions input in the condition entry support step.

The component purchase support device 1, the component purchase support method, and the component purchase support program according to one embodiment described above are understood as follows, for example.

The component purchase support device (1) according to the first aspect of the present disclosure is a component purchase support device (1) to support purchase of a plant component, and the component purchase support device includes: a condition entry support unit (31) configured to allow a user to input at least any one of a name of a component that the user wishes to purchase, a fluid type, a design temperature, a design pressure, an operation temperature, and an operation pressure as an input condition; a component selection unit (34) configured to select, from a model number database (21), plant components conforming to the input condition, model numbers of plant components and specification data being associated with each other in the model number database, and display all or some of the plurality of selected plant components on a client terminal as candidate components; and a quotation preparation unit (35) configured to acquire, from a price and delivery time database (22), prices and delivery times of the candidate components selected by the user, delivery times and prices of plant components being registered in the price and delivery time database on a supplier basis, and display the acquired prices and delivery times on the client terminal (70).

According to the component purchase support device (1) of the above aspect, with only simple user operation of inputting the input condition, plant components conforming to the input condition are automatically selected, and all or some of the plant components are presented as candidate components. This enables the user to select a desired one out of these candidate components. Further, since the prices and the delivery times are also presented for each candidate component, it is possible to easily arrange a desired plant component comprehensively under consideration on the price and the delivery time. Further, the period from condition entry to delivery of a plant component can be effectively shortened.

In the component purchase support device (1) according to the second aspect of the present disclosure, in the first aspect described above, the condition entry support unit may have an entry assist unit (41) configured to preliminarily input an input condition that was not input by the user out of the plurality of input conditions based on past accumulation data or an initial value set in advance.

According to the component purchase support device (1) of the above aspect, the burden on the user related to condition entry can be reduced, and the user convenience can be enhanced.

The component purchase support device (1) according to the third aspect of the present disclosure, in the first aspect or the second aspect described above, may further includes a component rough selection unit (32) configured to select, from the model number database, plant components conforming to the input conditions, acquire, from a price and delivery time past-record database, prices and delivery times of the plurality of selected plant components, past record values of delivery times and prices of plant components being registered in the price and delivery time past-record database on a supplier basis, select, based on the acquired prices and delivery times, the plant components to be presented as candidate components, and transmit information on the plurality of selected plant components to the client terminal.

According to the component purchase support device (1) of the above aspect, candidate components presented to the user are selected based on a past record value (for example, past record prices at quotation or past record prices at order receipt, past record delivery times at quotation or past record delivery times at order receipt). Accordingly, it is possible to present information on plant components to the user that are excellent in terms of the price and the delivery time out of a large number of components registered in the component purchase support device.

In the component purchase support device (1) according to the fourth aspect of the present disclosure, in the third aspect described above, the component rough selection unit (32) may select plant components conforming to the input condition by using a predetermined calculation formula not relying on suppliers of the plant components, and the component selection unit (34) may select the plant components by determining whether or not, out of the plant components selected by the component rough selection unit, each of the plant components selected by the user conforms to the input condition by using a calculation formula set by suppliers of the plant components.

For example, when a plant component is selected, selection criteria and calculation formulae may differ for respective suppliers. If calculations of respective suppliers are attempted at once, the calculation load becomes enormous, and a longer time may be required for review of the specification and the quotation.

According to the component purchase support device (1) of the above aspect, rough calculation is performed by the component rough selection unit by using a predetermined calculation formula (for example, an applicable standard or a general calculation formula) not relying on suppliers, and plant components conforming to the input condition are selected. The detailed calculation by the component selection unit is then performed on the plant component selected by the user out of the plant components selected by the component rough selection unit. Specifically, it is determined whether or not the plant component in question satisfies the required specification based on the input condition by using a calculation formula set by a supplier of a plant component selected by the user, and a component is selected based on the result of this determination.

As described above, it is possible to narrow down the number of plant components that proceed with the detailed calculation based on the result of the rough calculation, and it is thus possible to suppress the calculation load to the minimum while meeting the user's needs. Accordingly, the processing time can be shortened, and the user convenience can be improved.

In the component purchase support device (1) according to the fifth aspect of the present disclosure, in the third aspect or the fourth aspect described above, the component rough selection unit may transmit information on the plant components to the client terminal so that the plurality of candidate components are displayed in accordance with price ranking, delivery time ranking, low energy loss ranking, conformity degree ranking of conformity between an input condition and a specification of a plant component, customer review score ranking, or overall evaluation ranking.

According to the component purchase support device (1) of the above aspect, it is possible to present plant components that are excellent respectively in terms of important indexes in arrangement of plant components. Accordingly, it is possible to motivate the user to purchase the plant components and provide various information that will be referenced in selection of components.

The component purchase support device (1) according to the sixth aspect of the present disclosure, in any one of the first aspect to the fifth aspect described above, may include a component selection assist unit (33) configured to assist selection of a plant component performed by the user, and the component selection assist unit may acquire, from the model number database, specification data for model numbers having a specification close to a specification for a model number of any of the candidate components and provided by a single supplier and transmit information on a price and a delivery time associated with each of the model numbers and selection assist information including an operation condition and a design condition to the client terminal.

According to the component purchase support device (1) of the above aspect, the property for each model number and the design condition and the operation condition can be presented to the user. As a result, the user is able to review the degree of adjustment on the design condition that enables selection of a different model number and select a model number that meets the user's needs. Furthermore, the user is able to reconsider the operation condition or the design condition while viewing the price or the delivery time for each model number and select a product that better meets the user's needs.

In the component purchase support device (1) according to the seventh aspect of the present disclosure, in the sixth aspect described above, the selection assist information is, for example, information in which a property based on a specification of each of the model numbers is drawn in association with each model number on an orthogonal coordinate system having an axis representing a predetermined parameter and the operation condition and the design condition are drawn on the orthogonal coordinate system.

According to the component purchase support device (1) of the above aspect, it is possible to visually present the property for each model number and the design condition and the operation condition to the user. As a result, the user is able to intuitively recognize the degree of adjustment on the design condition that enables selection of a different model number and select a model number that meets the user's needs. Furthermore, the user is able to reconsider the operation condition or the design condition while viewing the price or the delivery time for each model number and select a product that better meets the user's needs.

In the component purchase support device (1) according to the eighth aspect of the present disclosure, in the seventh aspect described above, the design condition may be configured to be changeable by a user, and when the design condition is changed by the user, the candidate components may be re-selected based on the changed design condition.

For example, in the initial phase of engineering in fluid transport systems, acceptable operation conditions and design conditions have a margin, there is room often for a change in many cases. In contrast, in the phase of arranging plant components, specific operation conditions and design conditions are often set and presented to the user for facilitating the supplier to perform selection and for preventing the supplier from selecting a product that does not meet the user's request. In such a way, originally, even when there is a margin in the acceptable operation condition or design condition, the margin for conditions has to be intentionally reduced for reducing required time or rework of the process for arrangement. Thus, even when there is room for selecting a more advantageous product in particular in terms of the price or the delivery time, the user may arrange a plant component without being aware of such room.

In contrast, according to the component purchase support device (1) of the present aspect, since the design condition is configured to be able to be changed by the user, the user is able to change the design condition by easy operation of moving a design condition displayed in an orthogonal coordinate system to desired coordinates. Furthermore, when the design condition has been changed, selection of candidate components based on the changed design condition is performed again. Since selection of candidate components based on the changed design condition is automatically performed in such a way, the user is able to obtain information on candidate components for a plurality of design conditions without worrying about the required time or rework of the process for arrangement of a plant component, and this enables a wider range of selection of components.

In the component purchase support device (1) according to the ninth aspect of the present disclosure, in any one of the first aspect to the eighth aspect described above, the component selection unit may include a necessary condition determination unit (43) configured to determine whether or not the input condition satisfies a necessary condition required for selection of a model number of a plant component, and an inquiry support unit (44) configured to, when determining that the necessary condition is not satisfied, support a user inquiry to a supplier.

According to the component purchase support device (1) of the above aspect, when the input condition is insufficient, it is possible to arrange a plant component that matches the user's needs with cooperation of a supplier. This can expand the range of products that can be arranged from the component purchase support device as a starting point and improve the convenience.

In the component purchase support device (1) according to the tenth aspect of the present disclosure, in any one of the first aspect to the ninth aspect described above, the quotation preparation unit may include an option creation unit (45) configured to display option information for the candidate components selected by the user on the client terminal.

According to the component purchase support device (1) of the above aspect, the option information is presented to the user, this enables the user to purchase spare components or the like at the same time, and the user convenience is improved. Further, by providing spare components, various services, or the like to the user, it is possible to for suppliers to increase an opportunity of order receipt and expect an increase in sales.

The component purchase support device (1) according to the eleventh aspect of the present disclosure, in any one of the first aspect to the tenth aspect described above, may include an order reservation support unit (36) configured to, when an order reservation of the plant component is requested from the client terminal, transmit information about the order reservation to a supplier terminal (80).

According to the component purchase support device (1) of the above aspect, it is possible to ensure the presented quoted price and delivery time to be maintained for a certain period.

The component purchase support device (1) according to the twelfth aspect of the present disclosure, in any one of the first aspect to the eleventh aspect described above, may include a negotiation support unit (46) configured to support negotiation between the user and a supplier of the plant component for an order placement of the plant component.

According to the component purchase support device (1) of the above aspect, the user is able to negotiate with the supplier side for prices or delivery times in the same manner as the typical procurement process, and this can enhance the user convenience.

The component purchase support device (1) according to the thirteenth aspect of the present disclosure, in any one of the first aspect to the twelfth aspect described above, may include a delivery support unit (38) configured to, when an order placement of the plant component is requested from the client terminal, acquire information about delivery of the plant component on the order placement from a supplier and provide the acquired information about delivery of the plant component to the client terminal.

According to the component purchase support device (1) of the above aspect, each-time adjustment for delivery that would otherwise be a burden for both the user and the supplier can be easily performed.

The component purchase support method according to the fourteenth aspect of the present disclosure is a component purchase support method for supporting purchase of a plant component, and the component purchase support method includes: at a computer, allowing a user to input at least any one of a name of a component that the user wishes to purchase, a fluid type, a design temperature, a design pressure, an operation temperature, and an operation pressure as an input condition; selecting, from a model number database, plant components conforming to the input condition, model numbers of plant components and specification data being associated with each other in the model number database, and displaying all or some of the plurality of selected plant components on a client terminal as candidate components; and acquiring, from a price and delivery time database, prices and delivery times of the candidate components selected by the user, delivery times and prices of plant components being registered in the price and delivery time database on a supplier basis, and displaying the acquired prices and delivery times on the client terminal.

The component purchase support program according to the fifteenth aspect of the present disclosure is a component purchase support program that causes a computer to function as the component purchase support device according to any one of the first aspect to the thirteenth aspect described above.

### [Reference Signs List]

- 1: component purchase support device
- 11: CPU
- 12: auxiliary storage device
- 13: main memory
- 14: communication device
- 15: input unit
- 16: display unit
- 18: bus
- 22: price and delivery time database
- 23: price and delivery time past-record database
- 24: option database
- 31: condition entry support unit
- 32: component rough selection unit
- 33: component selection assist unit
- 34: component selection unit
- 35: quotation preparation unit
- 36: order reservation support unit
- 37: order placement support unit
- 38: delivery support unit
- 41: entry assist unit
- 42: automatic entry unit
- 43: necessary condition determination unit
- 44: inquiry support unit
- 45: option creation unit
- 46: negotiation support unit
- 70: client terminal
- 80: supplier terminal

## Claims

1. A component purchase support device configured to support purchase of a plant component, the component purchase support device comprising:
a condition entry support unit configured to allow a user to input at least any one of a name of a component that the user wishes to purchase, a fluid type, a design temperature, a design pressure, an operation temperature, and an operation pressure as an input condition;
a component selection unit configured to select, from a model number database, plant components conforming to the input condition, model numbers of plant components and specification data being associated with each other in the model number database, and display all or some of the plurality of selected plant components on a client terminal as candidate components; and
a quotation preparation unit configured to acquire, from a price and delivery time database, prices and delivery times of the candidate components selected by the user, delivery times and prices of plant components being registered in the price and delivery time database on a supplier basis, and display the acquired prices and delivery times on the client terminal.

2. The component purchase support device according to claim 1, wherein the condition entry support unit has an entry assist unit configured to preliminarily input an input condition that was not input by the user out of the plurality of input conditions based on past accumulation data or an initial value set in advance.

3. The component purchase support device according to claim 1 further comprising a component rough selection unit configured to
select, from the model number database, plant components conforming to the input conditions,
acquire, from a price and delivery time past-record database, prices and delivery times of the plurality of selected plant components, past record values of delivery times and prices of plant components being registered in the price and delivery time past-record database on a supplier basis,
select, based on the acquired prices and delivery times, the plant components to be presented as candidate components, and
transmit information on the plurality of selected plant components to the client terminal.

4. The component purchase support device according to claim 3,
wherein the component rough selection unit selects plant components conforming to the input condition by using a predetermined calculation formula not relying on suppliers of the plant components, and
wherein the component selection unit selects the plant components by determining whether or not, out of the plant components selected by the component rough selection unit, each of the plant components selected by the user conforms to the input condition by using a calculation formula set by suppliers of the plant components.

5. The component purchase support device according to claim 3, wherein the component rough selection unit transmits information on the plant components to the client terminal so that the plurality of candidate components are displayed in accordance with price ranking, delivery time ranking, low energy loss ranking, conformity degree ranking of conformity between an input condition and a specification of a plant component, customer review score ranking, or overall evaluation ranking.

6. The component purchase support device according to claim 1 further comprising a component selection assist unit configured to assist selection of a plant component performed by the user,
wherein the component selection assist unit acquires, from the model number database, specification data for model numbers having a specification close to a specification for a model number of any of the candidate components and provided by a single supplier and transmits information on a price and a delivery time associated with each of the model numbers and selection assist information including an operation condition and a design condition to the client terminal.

7. The component purchase support device according to claim 6, wherein the selection assist information is information in which a property based on a specification of each of the model numbers is drawn in association with each model number on an orthogonal coordinate system having an axis representing a predetermined parameter and the operation condition and the design condition are drawn on the orthogonal coordinate system.

8. The component purchase support device according to claim 7,
wherein the design condition is configured to be changeable by a user, and
wherein when the design condition is changed by the user, the candidate components are re-selected based on the changed design condition.

9. The component purchase support device according to claim 1, wherein the component selection unit comprises
a necessary condition determination unit configured to determine whether or not the input condition satisfies a necessary condition required for selection of a model number of a plant component, and
an inquiry support unit configured to, when determining that the necessary condition is not satisfied, support a user inquiry to a supplier.

10. The component purchase support device according to claim 1, wherein the quotation preparation unit comprises an option creation unit configured to display option information for the candidate components selected by the user on the client terminal.

11. The component purchase support device according to claim 1 further comprising an order reservation support unit configured to, when an order reservation of the plant component is requested from the client terminal, transmit information about the order reservation to a supplier terminal.

12. The component purchase support device according to claim 1 further comprising a negotiation support unit configured to support negotiation between the user and a supplier of the plant component for an order placement of the plant component.

13. The component purchase support device according to claim 1 further comprising a delivery support unit configured to, when an order placement of the plant component is requested from the client terminal, acquire information about delivery of the plant component on the order placement from a supplier and provide the acquired information about delivery of the plant component to the client terminal.

14. A component purchase support method for supporting purchase of a plant component, the component purchase support method comprising: at a computer,
allowing a user to input at least any one of a name of a component that the user wishes to purchase, a fluid type, a design temperature, a design pressure, an operation temperature, and an operation pressure as an input condition;
selecting, from a model number database, plant components conforming to the input condition, model numbers of plant components and specification data being associated with each other in the model number database, and displaying all or some of the plurality of selected plant components on a client terminal as candidate components; and
acquiring, from a price and delivery time database, prices and delivery times of the candidate components selected by the user, delivery times and prices of plant components being registered in the price and delivery time database on a supplier basis, and displaying the acquired prices and delivery times on the client terminal.

15. The component purchase support program that causes a computer to function as the component purchase support device according to any one of claims 1 to 13.
